# EUROPEAN PATENT APPLICATION

(11) **EP 2 741 545 A1**
(43) Date of publication of application: **11.06.2014**
(21) Application number: 12829467.5
(22) Date of filing: 12.07.2012
(51) Int. Cl.: H04W 36/34

(54) **MULTI-MODE USER EQUIPMENT ACCESS METHOD, BASE STATION AND MULTI-MODE USER EQUIPMENT**

(30) Priority: 07.09.2011 CN 201110264007
(71) Applicant: Huawei Technologies Co., Ltd, Shenzhen, Guangdong 518129 (CN)
(72) Inventor: XIAO, Dengkun, Shenzhen, Guangdong 518129 (CN); HE, Yuan, Shenzhen, Guangdong 518129 (CN); WU, Tong, Shenzhen, Guangdong 518129 (CN)
(74) Representative: Pfenning, Meinig & Partner GbR
(86) International application number: PCT/CN2012/078577
(87) International publication number: WO 2013/034029

(57) **Abstract**

Embodiments of the present invention provide a method for multimode user equipment access, a base station, and a user equipment. The method includes: receiving, by a first base station, radio resource management information of a neighboring base station of the first base station from a radio resource management server; receiving, by the first base station, an access request message from a multimode user equipment; determining, by the first base station, an accessible base station according to the radio resource management information of the neighboring base station and radio resource management information of the first base station; and sending, by the first base station, an access response message that is generated according to the determined accessible base station to the multimode user equipment, so that the multimode user equipment sets up a connection with the accessible base station according to the access response message. According to the embodiments of the present invention, a base station or a multimode user equipment can determine an accessible base station according to radio resource management information provided by a radio resource management server, so that a UE quickly accesses a network through the accessible base station.

## Description

### CROSS-REFERENCE TO RELATED APPLICATION

This application claims priority to Chinese Patent Application No. 201110264007.0, filed with the Chinese Patent Office on September 7, 2011 and entitled "METHOD FOR MULTIMODE USER EQUIPMENT ACCESS, BASE STATION, AND MULTIMODE USER EQUIPMENT".

### TECHNICAL FIELD

Embodiments of the present invention relate to the field of communications technologies, and in particular, to a method for multimode user equipment access, a base station, and a multimode user equipment.

### BACKGROUND

An existing radio network includes multiple radio access technologies (multi-RAT, multiple Radio Access Technology), such as the second generation mobile communications technology (2G, Second Generation), the third generation mobile communications technology (3G, Third Generation), the Long Term Evolution (LTE, Long Term Evolution), and the Long Term Evolution Advanced (LTE-A, Advanced long term evolution).

Generally, because no direct interfaces are available between RAT base stations of different types, they cannot mutually exchange corresponding resource conditions, load, and other information. In this case, in consideration of power savings and throughput, a process where a new multimode UE accesses a multi-radio access technology network (which may be briefly referred to as a multi-RAT network) may not be the most appropriate. For example, in order to access the multi-RAT network, the multimode UE may blindly try an inappropriate base station.

Currently, a core controller, namely, a radio resource management server (RRMS, Radio Resource Management Server) is arranged on the multi-RAT network. However, the RRMS is used only to manage, according to information relating to a new service, handover and/or cell reselection that is performed by the multimode UE between different RAT base stations.

Therefore, it is an important problem about how the multimode user equipment (UE, User Equipment) quickly accesses the multi-RAT network through an appropriate base station.

### SUMMARY

Embodiments of the present invention provide a method for multimode user equipment access, a base station, and a user equipment, so as to quickly access a multi-RAT network through an appropriate base station.

According to one aspect, a first base station receives radio resource management information of a neighboring base station of the first base station from a radio resource management server; the first base station receives an access request message; the first base station determines an accessible base station according to the radio resource management information of the neighboring base station and radio resource management information of the first base station; and the first base station sends an access response message that is generated according to the determined accessible base station to the multimode user equipment, so that the multimode user equipment sets up a connection with the accessible base station according to the access response message.

According to another aspect, a method for multimode user equipment access is provided, including: sending, by a multimode user equipment, an access request message and identifier information of at least one base station serving the multimode user equipment to a first base station, so that the first base station determines an accessible base station according to radio resource management information of a neighboring base station of the first base station and radio resource management information of the first base station; receiving, by the multimode user equipment from the first base station, an access response message that is generated according to the determined accessible base station; and determining, by the multimode user equipment, the accessible base station according to the access response message, so as to set up a connection with the accessible base station.

According to another aspect, a method for multimode user equipment access is provided, including: receiving, by a first base station, radio resource management information of a neighboring base station of the first base station from a radio resource management server; sending, by the first base station, the radio resource management information of the neighboring base station and radio resource management information of the first base station to a multimode user equipment, so that the multimode user equipment determines an accessible base station according to the radio resource management information of the neighboring base station and the radio resource management information of the first base station, and sets up a connection with the accessible base station.

According to another aspect, a method for multimode user equipment access is provided, including: receiving, by a multimode user equipment, radio resource management information of a neighboring base station of a first base station and radio resource management information of the first base station from the first base station, where the first base station receives the radio resource management information of the neighboring base station from a radio resource management server; determining, by the multimode user equipment, an accessible base station according to the radio resource management information of the neighboring base station and the radio resource management information of the first base station; and sending, by the multimode user equipment, an access request message to the accessible base station, so as to set up a connection with the accessible base station.

According to another aspect, a method for multimode user equipment access is provided, including: acquiring, by a radio resource management server, radio resource management information of at least one base station; sending, by the radio resource management server, radio resource management information of a neighboring base station of one of the at least one base station to the one of the at least one base station, so that the one of the at least one base station or the multimode user equipment determines an accessible base station for the multimode user equipment according to the radio resource management information and identifier information of a base station serving the multimode user equipment, so that the multimode user equipment sets up a connection with the accessible base station.

According to another aspect, a base station is provided, including: a receiving module, configured to receive radio resource management information of a neighboring base station of the base station from a radio resource management server, and configured to receive an access request message from the multimode user equipment; a determining module, configured to, after the receiving module receives the access request message, determine an accessible base station according to radio resource management information of the base station and the radio resource management information of the neighboring base station that is received by the receiving module; and a sending module, configured to send an access response message that is generated according to the accessible base station determined by the determining module to the multimode user equipment, so that the multimode user equipment sets up a connection with the accessible base station according to the access response message.

According to another aspect, a multimode user equipment is provided, including: a sending module, configured to send an access request message and identifier information of at least one base station serving the multimode user equipment to a first base station, so that the first base station determines an accessible base station according to radio resource management information of a neighboring base station of the first base station, radio resource management information of the first base station, and the identifier information of the at least one base station; a receiving module, configured to receive, from the first base station, an access response message that is generated by the first base station according to the determined accessible base station after the first base station receives the access request message from the sending module; and a determining module, configured to determine the accessible base station according to the access response message received by the receiving module, so as to set up a connection with the accessible base station.

According to another aspect, a base station is provided, including: a receiving module, configured to receive radio resource management information of a neighboring base station of a first base station from a radio resource management server; a sending module, configured to send radio resource management information of the first base station and the radio resource management information of the neighboring base station that is received by the receiving module to a multimode user equipment, so that the multimode user equipment determines an accessible base station according to the radio resource management information of the neighboring base station and the radio resource management information of the first base station, and sets up a connection with the accessible base station.

According to another aspect, a multimode user equipment is provided, including: a receiving module, configured to receive radio resource management information of a neighboring base station of a first base station and radio resource management information of the first base station from the first base station, where the first base station receives the radio resource management information of the neighboring base station from a radio resource management server; a determining module, configured to determine an accessible base station according to the radio resource management information of the first base station and the radio resource management information of the neighboring base station that is received by the receiving module; and a sending module, configured to send an access request message to the accessible base station determined by the determining module, so as to set up a connection with the accessible base station.

According to another aspect, a radio resource management server is provided, including: an acquiring module, configured to acquire radio resource management information of at least one base station; and a sending module, configured to send radio resource management information of a neighboring base station of one of the at least one base station to the one of the at least one base station, where the radio resource management information of the neighboring base station is acquired by the acquiring module, so that the one of the at least one base station or a user equipment determines an accessible base station for the multimode user equipment according to the radio resource management information and identifier information of a base station serving the multimode user equipment, so that the multimode user equipment sets up a connection with the accessible base station.

According to the embodiments of the present invention, a serving base station of a multimode user equipment or the multimode user equipment can determine an accessible base station according to radio resource management information of the serving base station and radio resource management information of a neighboring base station of the serving base station, where the radio resource management information of the neighboring base station is provided by a radio resource management server, so that the multimode UE is capable of quickly accessing a multi-RAT network through the accessible base station.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for multimode user equipment access according to an embodiment of the present invention;
FIG. 2 is a schematic flowchart of a method for multimode user equipment access according to an embodiment of the present invention;
FIG. 3 is a flowchart of a process for multimode user equipment access according to another embodiment of the present invention;
FIG. 4 is a schematic flowchart of a method for multimode user equipment access according to another embodiment of the present invention;
FIG. 5 is a schematic flowchart of a method for multimode user equipment access according to another embodiment of the present invention;
FIG. 6 is a flowchart of a process for multimode user equipment access according to another embodiment of the present invention;
FIG. 7 is a schematic flowchart of a method for multimode user equipment access according to another embodiment of the present invention;
FIG. 8 is a schematic structural diagram of a base station according to an embodiment of the present invention;
FIG. 9 is a schematic structural diagram of a multimode user equipment according to another embodiment of the present invention;
FIG. 10 is a schematic structural diagram of a base station according to an embodiment of the present invention;
FIG. 11 is a schematic structural diagram of a multimode user equipment according to another embodiment of the present invention;
FIG. 12 is a schematic structural diagram of a radio resource management server according to an embodiment of the present invention;
FIG. 13 is a schematic flowchart of a method for multimode user equipment access according to another embodiment of the present invention;
FIG. 14 is a schematic flowchart of a method for multimode user equipment access according to another embodiment of the present invention;
FIG. 15 is a flowchart of a process for multimode user equipment access according to another embodiment of the present invention;
FIG. 16 is a schematic flowchart of a method for multimode user equipment access according to another embodiment of the present invention;
FIG. 17 is a schematic flowchart of a method for multimode user equipment access according to another embodiment of the present invention;
FIG. 18 is a flowchart of a process for multimode user equipment access according to another embodiment of the present invention;
FIG. 19 is a schematic structural diagram of a radio resource management server according to another embodiment of the present invention;
FIG. 20 is a schematic structural diagram of a base station according to another embodiment of the present invention;
FIG. 21 is a schematic structural diagram of a base station according to another embodiment of the present invention; and
FIG. 22 is a schematic structural diagram of a multimode user equipment according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be understood that the technical solutions in the present invention may be applied to various communications systems, such as a Global System for Mobile Communications (GSM, Global System of Mobile communication) system, a Code Division Multiple Access 2000 (CDMA2000, Code Division Multiple Access 2000) system, a Wideband Code Division Multiple Access (WCDMA, Wideband Code Division Multiple Access) system, a Time Division-Synchronous Code Division Multiple Access system (TD-SCDMA, Time Division-Synchronous Code Division Multiple Access), a General Packet Radio Service (GPRS, General Packet Radio Service) system, a Long Term Evolution (LTE, Long Term Evolution) system, a Long Term Evolution Advanced (LTE-A, Advanced long term evolution) system, and a Universal Mobile Telecommunications System (UMTS, Universal Mobile Telecommunication System). The embodiments of the present invention are described by using an LTE network and/or an LTE-A network as an example. However, the embodiments of the present invention are not limited thereto.

It should also be understood that in the embodiments of the present invention, a terminal may also be called a user equipment (UE, User Equipment), a mobile station (MS, Mobile Station), a mobile terminal (Mobile Terminal), or the like, and the terminal may communicate with one or more core networks through a radio access network (RAN, Radio Access Network). For example, the terminal may be a mobile phone (or called a "cellular" phone), or a computer equipped with a mobile terminal; and for example, the terminal may also be a portable, pocket-sized, hand-held, computer built-in, or vehicle-mounted mobile apparatus.

It should also be understood that in the embodiments of the present invention, a base station may be a base station (BTS, Base Transceiver Station) in a GSM and a GPRS, or may be a base station (NB, NodeB) in a WCDMA, a TD-SCDMA, and a CDMA 2000, or may be an evolved base station (eNB or eNodeB, Evolutional Node B) in an LTE and an LTE-A or an access point (AP, Access Point), including a pico base station (Pico), a relay (Relay), a home base station (Femto/HeNB), a remote radio head (RRH), and a repeater (Repeater), which is not limited in the embodiments of the present invention. However, for ease of description, the following embodiments are described by using an eNB and an NB as examples.

It should also be understood that in the embodiments of the present invention, an access network element may be the foregoing base station or may be a radio network controller (Radio Network Controller, RNC) on a WCDMA network, a TD-SCDMA network, and a CDMA 2000 network or a base station controller (Base Station Controller, BSC) on a GSM network and a GPRS network.

It should be noted that a multimode UE according to the embodiments of the present invention may be a UE working in multiple communications modes and is not limited to a user equipment that supports a multimode and multi-standby function or a UE that internally implements convergence of multiple communications modes in an automatic manner.

It should be noted that in a case where the multimode UE is in an idle (idle) state, a serving base station of the multimode UE according to the embodiments of the present invention may refer to a base station that the multimode UE camps on after cell selection or cell reselection; in this case, the multimode UE may receive a paging message delivered by the serving base station, and when it needs to access a multi-RAT network, send an access request to the serving base station. While in a case where the multimode UE is in a connected (connected) state, a serving base station of the multimode UE according to the embodiments of the present invention may refer to a base station that stays connected with the multimode UE; in this case, data and/or a message may be transmitted between the multimode UE and the serving base station, and when the multimode UE needs to access the RAT network to perform another service, it initiates an access request for the another service to the serving base station.

In a case where an RRMS is arranged on the RAT network, accessing the RAT network by the multimode UE through the following access process may be considered: The multimode UE sends the access request to the serving base station, the serving base station forwards the access request to the RRMS, the RRMS performs an evaluation, selects an appropriate base station, and sends an access response to the serving base station, and finally, the serving base station sends the access response to the UE. However, because the multimode UE needs to send the access request to the RRMS through the serving base station and the RRMS then notifies the UE through the serving base station after selecting the appropriate base station, there is a relatively long delay during access.

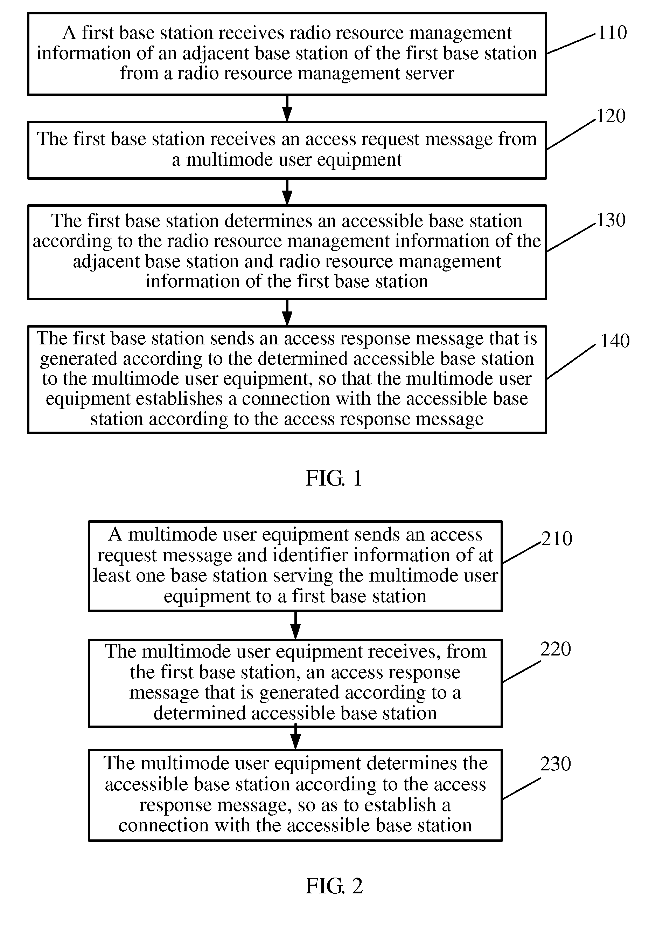

FIG. 1 is a schematic flowchart of a method for multimode UE access according to an embodiment of the present invention. The method in FIG. 1 is executed by a base station.

110. A first base station receives radio resource management information of a neighboring base station of the first base station from an RRMS.

For example, the first base station may be a base station (for example, an eNB in the LTE) of any type on a multi-RAT network, and the neighboring base station of the first base station may be one or more base stations of another type (for example, a BTS in the GSM).

For example, the RRMS may be a core controller on the multi-RAT network. The embodiment of the present invention is not limited thereto. The RRMS may also be another functional entity that is capable of performing radio resource management or another functional entity that is capable of providing radio resource management information of each base station.

For example, the radio resource management information may be information (for example, radio resource condition information and/or load information of each base station) that is reported by each base station to the RRMS to perform radio resource management. The radio resource management information may be in a form of an information element (IE) in a message. More specifically, the radio resource management information may be in a form of a list or a table (list), and the list or the table may include identifier information of a base station and corresponding radio resource management information. For example, the base station may receive the radio resource management information periodically sent by the RRMS. The embodiment of the present invention is not limited thereto.

120. The first base station receives an access request message from the multimode UE.

For example, the access request message may be an access request sent by the multimode UE to a serving base station that the multimode UE camps on, and is used to set up a connection with the serving base station, or may be an access request sent by the multimode UE to a serving base station with which the multimode UE has set up a certain connection, and is used to further set up another connection.

130. The first base station determines an accessible base station according to the radio resource management information of the neighboring base station of the first base station and radio resource management information of the first base station.

For example, the first base station may sequence the first base station and the neighboring base station of the first base station according to the radio resource management information of the first base station and the radio resource management information of the neighboring base station, and select the most appropriate base station (for example, a base station with the lowest load or a base station with the most idle radio resources) as the accessible base station based on a result of the sequencing. Alternatively, the RRMS may also perform the sequencing operation and send a result of the sequencing to the first base station, and the first base station determines the accessible base station based on the received result of the sequencing. However, the embodiment of the present invention is not limited thereto. The sequencing operation may also be performed based on a certain policy of an operator. For example, a different weighting factor may be given to each base station according to priorities of the base stations during the sequencing, so that a base station with a relatively high priority is preferentially accessed. For example, in a case where load of the first base station is not heavy and/or relatively many idle resources are available, the first base station is preferentially selected as the accessible base station.

Further, the first base station may further receive at least one of the following factors sent by the multimode UE: quality of service (Quality of Service, QoS) of a service of the multimode UE, bandwidth required by the service, a transmission rate of the multimode UE, a measurement result of a metric of a base station, transmit power of the multimode UE, and location information of the multimode UE. In addition, the first base station determines the accessible base station, that is, selecting the most appropriate base station, according to the radio resource management information and at least one of the following factors: the QoS of the service of the multimode UE, the bandwidth required by the service, the transmission rate of the multimode UE, the measurement result of the metric of the base station, the transmit power of the multimode UE, and the location information of the multimode UE. For example, the accessible base station may be one or more of the following base stations: a base station that meets the QoS of the service of the multimode UE and meets the required bandwidth, a base station that achieves the highest transmission rate for the multimode UE, a base station with the greatest measurement result (for example, a base station with the strongest signal strength, a base station with the best signal quality, or a base station with the greatest signal-to-noise ratio), a base station that achieves the minimum transmit power for the multimode UE, a base station that is closest to the multimode UE, a base station that has the most radio resources, a base station with the lowest load, and a base station that achieves the largest system throughput after access by the multimode UE. In other words, the accessible base station may be determined jointly according to the foregoing information.

According to the embodiment of the present invention, when multiple parameters among the foregoing parameters are jointly used to determine the accessible base station, the accessible base station may be determined according to a preset performance algorithm for radio resource management. For example, a priority may be set for each parameter, and the accessible base station is determined with reference to the priority of each parameter. For example, base station A has a lighter load than base station B, but is remoter to the UE than base station B, and if a priority of load information is higher than a priority of location information, base station A is then selected as the accessible base station. For another example, a weighting factor may be set for each parameter, and the accessible base station is determined with reference to the weighting factor of each parameter. For example, base stations may be sequenced according to each parameter and the base stations are scored according to the sequencing, and if a certain parameter of a base station makes the base station more appropriate than another base station to serve as the accessible base station, the base station that ranks closer to the top wins a higher score. For example, weighting factors of load information, resource state information, and location information are 0.5, 0.3, and 0.2, respectively, scores of base station A upon ranking are 1, 2, and 1, respectively, and scores of base station B upon ranking are 2, 1, and 2, respectively; that is, a final score of base station A for serving as the accessible base station is 1*0.5 + 2*0.3 + 1*0.2 = 1.3, a final score of base station B for serving as the accessible base station is 2*0.5 + 1*0.3 + 2*0.2 = 1.7. Because 1.7 > 1.3, base station B is selected as the accessible base station. It should be understood that for the sake of clarity, the foregoing only exemplarily describes a method for determining an accessible base station according to multiple parameters; the embodiment of the present invention is not limited thereto, and the foregoing performance algorithm may be determined according to a policy of an operator or according to actual needs.

140. The first base station sends an access response message that is generated according to the determined accessible base station to the multimode UE, so that the multimode UE sets up a connection with the accessible base station according to the access response message.

For example, the access response message may be used to notify the multimode UE of information relating to the accessible base station, for example, identifier information of the accessible base station. When the multimode UE receives the access response message, it may know which base station it should set up a connection with. The embodiment of the present invention is not limited thereto. For example, the first base station may send an access response message of a different type to the multimode UE according to whether the accessible base station is the first base station or another base station.

According to the embodiment of the present invention, on a multi-RAT network, the base station serving a multimode UE may acquire radio resource management information of a neighboring base station of the base station from an RRMS; when receiving an access request of the multimode UE, determine, according to the radio resource management information, an accessible base station that is appropriate for access by the multimode UE; and notify the multimode UE of the accessible base station, so that the multimode UE is capable of quickly accessing the multi-RAT network through the accessible base station. In addition, the serving base station does not need to initiate a request to the RRMS when receiving the access request, thereby further reducing delay during access by the multimode UE.

According to another embodiment of the present invention, the method in FIG. 1 further includes: receiving, by the first base station from the multimode UE, identifier information of at least one base station serving the multimode UE, where in 130, the first base station selects, according to the radio resource management information of the neighboring base station of the first base station, the radio resource management information of the first base station, and the identifier information of the at least one base station, a base station that is appropriate for access as the accessible base station.

For example, the multimode UE may receive a system message broadcast by a base station when the multimode UE moves into the coverage of the base station on the multi-RAT network, and acquire from the system message the identifier information of the base station serving the multimode UE.

According to another embodiment of the present invention, the method in FIG. 1 further includes: sequencing, by the first base station, the neighboring base station of the first base station and the first base station according to the radio resource management information of the neighboring base station of the first base station and the radio resource management information of the first base station, where in 130, the first base station selects, according to a result of the sequencing and from an intersection between the neighboring base station and the at least one base station, a base station that is appropriate for access as the accessible base station, or selects, according to a result of the sequencing and the identifier information of the at least one base station and from an intersection between the neighboring base station and the at least one base station and from the first base station, a base station that is appropriate for access as the accessible base station.

For example, the first base station may first sequence the first base station and the neighboring base station according to the radio resource management information (for example, with the lowest load and/or idle radio resources) of the neighboring base station of the first base station and the radio resource management information of the first base station, and then select, according to a result of the sequencing and the identifier information of the base station serving the multimode UE and from the intersection between the neighboring base station and the at least one base station and from the first base station, a base station with the lowest load and/or with the most idle radio resources as the accessible base station. However, the embodiment of the present invention is not limited thereto. The sequencing may also be performed based on a certain policy of an operator. For example, when the base stations are sequenced, in a case where load conditions and/or radio resource conditions are the same, a base station with a relatively high priority is preferentially selected as the accessible base station.

For example, the identifier information of the at least one base station serving the multimode UE may be included in the access request message. The embodiment of the present invention is not limited thereto. For example, the identifier information of the at least one base station may also be sent by using a separate message.

Because the multimode UE is more likely to successfully access a base station that is serving the multimode UE, an access success rate of the multimode UE may further be improved by selecting the accessible base station from the intersection between the neighboring base station and the base station serving the multimode UE and from the first base station.

According to the embodiment of the present invention, when the accessible base station is the first base station, the access response message is a connection setup message, or when the accessible base station is one of the at least one base station, the access response message is a connection rejection message, where the connection rejection message includes identifier information of the accessible base station.

For example, if the first base station is determined as the accessible base station in 130, it indicates that the multimode UE may directly set up a connection with the first base station, and therefore the first base station may respond a connection setup message to the UE, so as to set up a connection with the multimode UE. If another base station is determined as the accessible base station in 130, it indicates that the first base station rejects setting up a connection with the multimode UE, and therefore the access response message may be a connection rejection message, so as to notify the multimode UE of setting up a connection with the another base station. According to the embodiment of the present invention, returning a corresponding access response message according to whether the determined accessible base station is the first base station or another base station may further reduce the number of times in sending an access request. For example, if the multimode UE receives a connection setup message, it may directly set up a connection with the first base station, without a need to send an access request to the first base station again.

The foregoing describes the method for multimode UE access provided in the embodiment of the present invention from the perspective of a base station with reference to FIG. 1. The following describes the method for multimode UE access provided in an embodiment of the present invention from the perspective of a UE.

FIG. 2 is a schematic flowchart of a method for multimode UE access according to another embodiment of the present invention. The method in FIG. 2 is executed by a multimode UE and corresponds to the method in FIG. 1.

210. The multimode UE sends an access request message and identifier information of at least one base station serving the multimode UE to a first base station, so that the first base station determines an accessible base station according to radio resource management information of a neighboring base station of the first base station, radio resource management information of the first base station, and the identifier information of the at least one base station.

For example, the access request message may be an access request sent by the multimode UE to a serving base station that the multimode UE camps on, and is used to set up a connection with the serving base station, or may be an access request sent by the multimode UE to a serving base station with which the multimode UE has set up a certain connection, and is used to further set up another connection. For example, the multimode UE has set up a connection with the first base station for performing a voice service, and when a user expects that the multimode UE performs a packet service, the multimode UE may initiate an access request for the packet service. After the first base station receives the access request, the accessible base station that is determined according to the method in FIG. 1 either performs the voice service and the packet service concurrently with the first base station or maintains the voice service with the first base station and concurrently selects another base station for performing the packet service. In 210, the first base station may be a base station serving the multimode UE.

220. The multimode UE receives, from the first base station, an access response message that is generated according to the determined accessible base station.

For example, the access response message may carry information relating to the accessible base station, for example, identifier information of the base station.

230. The multimode UE determines the accessible base station according to the access response message, so as to set up a connection with the accessible base station.

For example, when the multimode UE receives the access response, it may determine the base station to access according to the identifier information of the accessible base station that is included in the access response message. The embodiment of the present invention is not limited thereto. For example, the multimode UE may determine whether it should access the first base station or another base station according to a type of the access response message.

According to the embodiment of the present invention, when a multimode UE needs to access a multi-RAT network, it may initiate an access request to a serving base station, so that the serving base station determines, according to the radio resource management information, an accessible base station that is appropriate for access by the multimode UE, and the multimode UE quickly accesses the multi-RAT network according to information of the accessible base station provided by the serving base station. In addition, the serving base station does not need to initiate an access request to an RRMS when receiving the access request, thereby further reducing delay during access by the multimode UE.

According to the embodiment of the present invention, in 230, when the access response message is a connection setup message, the multimode UE determines that the accessible base station is the first base station, so as to set up a connection with the first base station.

According to the embodiment of the present invention, in 230, when the access response message is a connection rejection message, the multimode UE determines that the accessible base station is one of the at least one base station, where the connection rejection message includes information of the one of the at least one base station; the multimode UE extracts the information of the one of the at least one base station from the connection rejection message; and the multimode UE sends another access request message to the one of the at least one base station, so as to set up a connection with the one of the at least one base station.

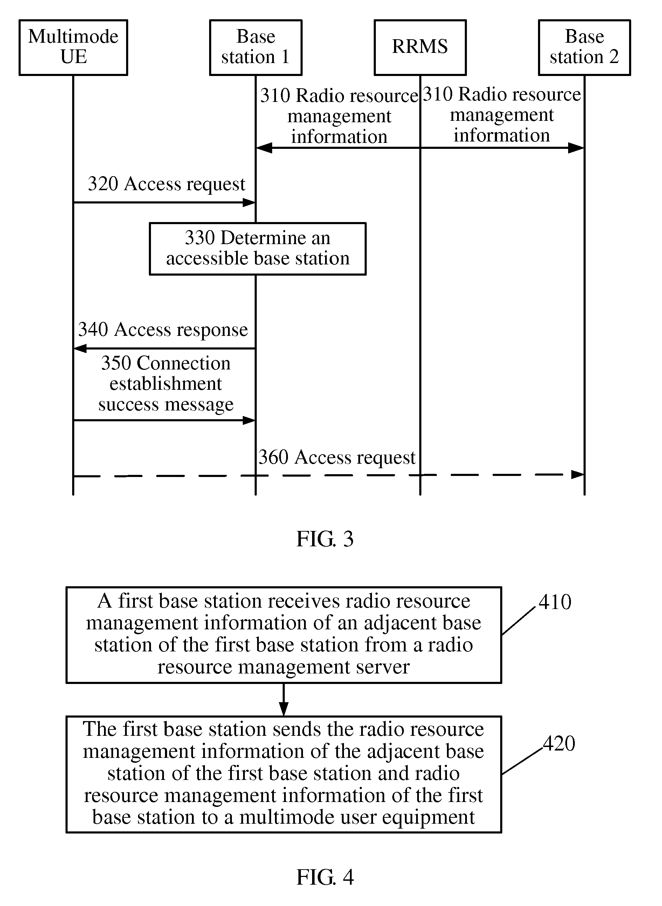

The following describes in further detail the embodiment of the present invention with reference to specific examples. FIG. 3 is a flowchart of a process for multimode UE access according to another embodiment of the present invention. In FIG. 3, an eNB indicates a base station that is serving a multimode UE. However, the present invention is not limited to a specific standard indicated by the term, but may similarly be applied to a base station in another form.

310. An RRMS periodically sends radio resource management information (for example, load and/or resource condition information) of a neighboring base station of each base station to each base station. For example, in an LTE system or an LTE-A system, load may be represented by a Load Indicator IE (for a specific format, reference may be made to section 9.2.36 in 3GPP TS 36.423 v9.2.0) in LTE X2 application protocol (X2AP), which is used to indicate a load condition. A resource condition may be represented by using a Radio Resource Status IE (for a specific format, reference may be made to section 9.2.37 in 3GPP TS 36.423 v9.2.0) in LTE X2AP, which is used to indicate utilization rates of an uplink physical radio resource block and a downlink physical radio resource block (PRB, Physical Resource Block).

320. The multimode UE sends an access request message to base station 1 (for example, an eNB) serving the multimode UE, where the access request includes information (for example, an identifier of a base station) about a base station serving the multimode UE. For example, in the LTE system or the LTE-A system, the access request message may be an RRCConnectionRequest message (for a specific format, refer to 3GPP TS 36.331) during setup of an RRC (Radio Resource Control, Radio Resource Control protocol) connection. Optionally, the access request may not include information of the base station serving the multimode UE.

330. Base station 1 maintains an internal list (or table) according to the received radio resource management information of the neighboring base station. For example, base station 1 may sequence base station 1 and a neighboring base station of base station 1 according to the sizes of load, and/or sequence base station 1 and the neighboring base station of base station 1 according to the numbers of idle radio resources. When base station 1 receives the access request of the multimode UE, it sequences, according to a result of the sequencing and identifier information of the base station serving the multimode UE, the base station serving the multimode UE, and selects a base station with the lowest load and/or selects a base station with the most idle radio resources as an accessible base station of the multimode UE. Objects for the sequencing are base station 1 and a base station that is neighboring to base station 1, serves the multimode UE, and is included in the access request. In other words, an intersection, which is between the neighboring base station of base station 1 and the base station serving the multimode UE, and base station 1 are sequenced.

340. Base station 1 sends an access response message to the multimode UE. If base station 1 selects itself as the accessible base station in 330, the access response message may be a connection setup message (for example, an RRCConnectionSetup message during setup of an RRC connection); that is, base station 1 initiates a connection to the multimode UE, indicating successful access. If base station 1 selects the base station that is neighboring to base station 1 and serves the multimode UE, namely, base station 2 (for example, a BTS) as the accessible base station in 330, the access response message may be a connection rejection message (for example, an RRCConnectionReject message during setup of an RRC connection), where the connection rejection message may include information (for example, an identifier of base station 2) about the accessible base station. In other words, base station 1 selects a base station with lighter load and/or with more idle radio resources as the accessible base station for the multimode UE.

350. If the access response message received by the multimode UE from base station 1 is a connection setup message, the multimode UE feeds back a connection setup success message (for example, an RRCConnectionSetupComplete message in an RRC connection) to base station 1, indicating that setup of the connection is completed, that is, base station 1 is successfully accessed.

360. If the access response message received by the multimode UE from base station 1 is a connection rejection message, it indicates that the multimode UE fails to access base station 1, and therefore the multimode UE may send a new access request message to the accessible base station according to information of the accessible base station provided in the access response message.

In the foregoing embodiments of FIG. 1 and FIG. 2, a base station executes the process of determining an accessible base station. In the following embodiments of FIG. 3 and FIG. 4, a multimode UE executes the process of determining an accessible base station.

FIG. 4 is a schematic flowchart of a method for multimode UE access according to another embodiment of the present invention. The method in FIG. 4 is executed by a base station.

410. A first base station receives radio resource management information of a neighboring base station of the first base station from an RRMS. 410 in FIG. 4 is similar to 110 in FIG. 1, and to avoid repetition, no further details are provided herein.

420. The first base station sends the radio resource management information of the neighboring base station of the first base station and radio resource management information of the first base station to a multimode UE, so that the multimode UE determines an accessible base station according to the radio resource management information of the neighboring base station of the first base station and the radio resource management information of the first base station, and sets up a connection with the accessible base station.

According to the embodiment of the present invention, in 420, the first base station broadcasts the radio resource management information of the neighboring base station of the first base station and the radio resource management information of the first base station to the multimode UE.

For example, the first base station may periodically broadcast the radio resource management information of the first base station and the radio resource management information of the neighboring base station of the first base station through a system message. The embodiment of the present invention is not limited thereto. For example, the first base station may also deliver the radio resource management information after receiving an access request of the multimode UE, or deliver the radio resource management information based on another triggering event.

According to the embodiment of the present invention, on a multi-RAT network, a base station may deliver radio resource management information of the base station and radio resource management information of a neighboring base station of the base station to a multimode UE, so that when the multimode UE needs access, it may quickly determine, according to the received radio resource management information, an accessible base station that is appropriate for access by the multimode UE. In addition, the multimode UE may send an access request directly to the accessible base station, thereby further reducing delay during access by the multimode UE.

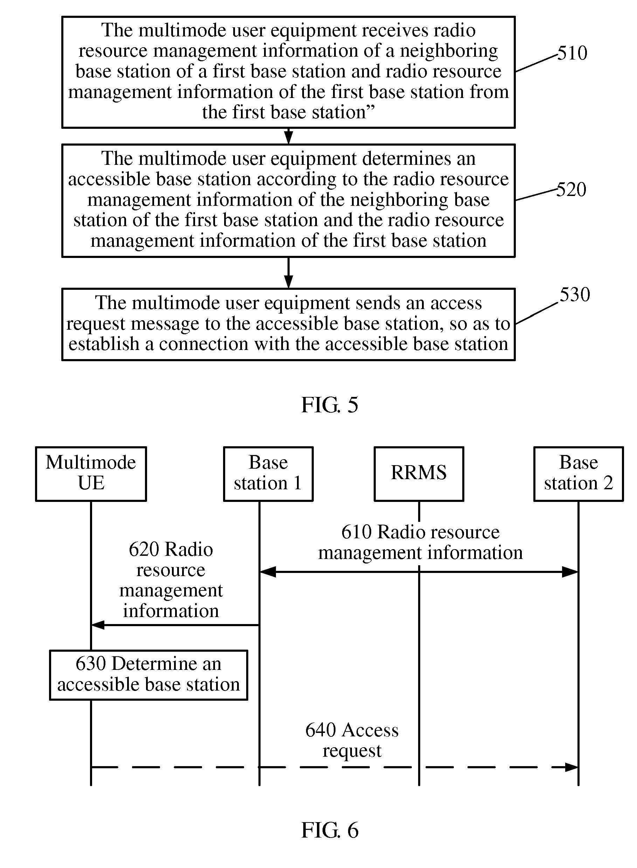

FIG. 5 is a schematic flowchart of a process for multimode UE access according to another embodiment of the present invention. The method in FIG. 5 is executed by a multimode UE and corresponds to the method in FIG. 4.

510. The multimode UE receives radio resource management information of a neighboring base station of a first base station and radio resource management information of the first base station from the first base station, where the first base station receives the radio resource management information of the neighboring base station of the first base station from an RRMS.

520. The multimode UE determines an accessible base station according to the radio resource management information of the neighboring base station of the first base station and the radio resource management information of the first base station.

For example, when the multimode UE needs to access a multi-RAT network, the multimode UE may sequence the first base station and the neighboring base station of the first base station according to the radio resource management information of the first base station and the radio resource management information of the neighboring base station, and select the most appropriate base station (for example, a base station with the lowest load or a base station with the most idle radio resources) as the accessible base station based on a result of the sequencing. Alternatively, the RRMS may also perform the sequencing operation and send a result of the sequencing to the multimode UE, and the multimode UE determines the accessible base station based on the received result of the sequencing. However, the embodiment of the present invention is not limited thereto. The sequencing may also be performed based on a certain policy of an operator. For example, a different weighting factor may be given to each base station according to priorities of the base stations during the sequencing, so that a base station with a relatively high priority is preferentially accessed.

Further, the multimode UE may also determine the accessible base station, that is, selecting the most appropriate base station, according to the radio resource management information and at least one of the following factors: QoS of a service of the multimode UE, bandwidth required by the service, a transmission rate of the multimode UE, a measurement result of a metric of each base station, transmit power of the multimode UE, and location information of the multimode UE. The method for determining an accessible base station jointly according to the foregoing information is similar to that in 130 of FIG. 1, and no further details are provided herein.

530. The multimode UE sends an access request message to the accessible base station, so as to set up a connection with the accessible base station.

For example, the access request message may be an access request sent by the multimode UE to a serving base station that the multimode UE camps on, and is used to set up a connection with the serving base station, or may be an access request sent by the multimode UE to a serving base station with which the multimode UE has set up a certain connection, and is used to further set up another connection. In 510, the first base station may be a base station serving the multimode UE.

According to another embodiment of the present invention, the method in FIG. 5 further includes: acquiring, by the multimode UE, identifier information of at least one base station serving the multimode UE, where in 520, the multimode UE selects, according to the radio resource management information of the neighboring base station of the first base station, the radio resource management information of the first base station, and the identifier information of the at least one base station, a base station that is appropriate for access as the accessible base station.

For example, the multimode UE may receive a system message broadcast by a base station when the multimode UE moves into the coverage of the base station on the multi-RAT network, and acquire, from the system message, identifier information of the base station serving the multimode UE.

According to the embodiment of the present invention, the method in FIG. 5 further includes: sequencing, by the multimode UE, the neighboring base station of the first base station and the first base station according to the radio resource management information of the neighboring base station of the first base station and the radio resource management information of the first base station, where in 520, the multimode UE selects, according to a result of the sequencing, a base station that is appropriate for access as the accessible base station, or selects, according to a result of the sequencing and the identifier information of the at least one base station and from an intersection between the neighboring base station and the at least one base station and from the first base station, a base station that is appropriate for access as the accessible base station.

For example, the multimode UE may first sequence the first base station and the neighboring base station according to the radio resource management information (for example, with the lowest load and/or idle radio resources) of the neighboring base station of the first base station and the radio resource management information of the first base station, and then select, according to a result of the sequencing and the identifier information of the base station serving the multimode UE and from the intersection between the neighboring base station and the at least one base station and from the first base station, a base station with the lowest load and/or with the most idle radio resources as the accessible base station. However, the embodiment of the present invention is not limited thereto. The sequencing may also be performed based on a certain policy of an operator. For example, when the base stations are sequenced, in a case where load conditions and/or radio resource conditions are the same, a base station with a relatively high priority is preferentially selected as the accessible base station.

According to the embodiment of the present invention, on a multi-RAT network, a certain base station serving a multimode UE may broadcast, in system information of the base station, radio resource management information of the base station and radio resource management information of a neighboring base station of the base station, so that when the multimode UE needs to access the RAT network, it may quickly determine, according to the received radio resource management information, an accessible base station that is appropriate for access by the multimode UE. In addition, the multimode UE may send an access request directly to the accessible base station, thereby further reducing delay during access by the multimode UE.

The following describes in further detail the embodiment of the present invention with reference to specific examples. FIG. 6 is a flowchart of a process for multimode UE access according to another embodiment of the present invention. In FIG. 6, an eNB indicates a base station that is serving a multimode UE. However, the present invention is not limited to a specific standard indicated by the term, but may similarly be applied to a base station in another form.

610. An RRMS periodically sends load and/or resource condition information of a neighboring base station of each base station to each base station. 610 in FIG. 6 is similar to 310 in FIG. 3, and no further details are provided herein.

620. Base station 1 serving the multimode UE broadcasts, in system information (System Information), load and/or resource condition information of base station 1 and of a neighboring base station. For example, in an LTE system or an LTE-A system, the load and/or resource condition information may be represented by an IE (for example, an SIB2 IE) in a system information block (SIB, System Information Block).

630. The multimode UE maintains an internal list (or table) according to the received radio resource management information of base station 1 and radio resource management information of an neighboring base station of base station 1. When the multimode UE needs to access a multi-RAT network, it may select, according to load and/or resource conditions of different base stations that are received from the broadcast system information, an appropriate base station for access. Specifically, the multimode UE sequences RAT base stations that serve the multimode UE and whose load and resource conditions are known, that is, performs the sequencing according to the sizes of load and/or performing the sequencing according to the numbers of idle radio resources, and selects a base station with the lowest load and/or with the most idle radio resources as an accessible base station of the multimode UE. Objects for the sequencing are base stations serving the multimode UE; in other words, an intersection, which is between the neighboring base station of base station 1 and the base stations serving the multimode UE, and base station 1 are sequenced.

640. Send an access request to the accessible base station.

For example, the multimode UE may initiate the access request to the accessible base station according to identifier information of the determined accessible base station, so as to set up a connection with the accessible base station.

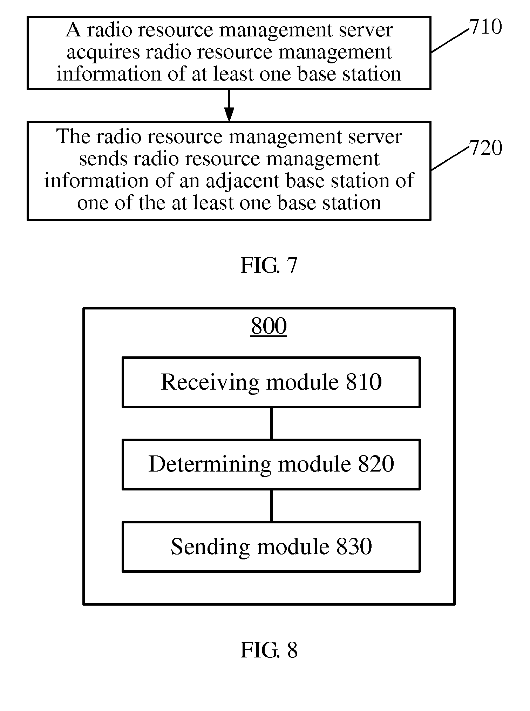

FIG. 7 is a flowchart of a method for multimode UE access according to another embodiment of the present invention. The method in FIG. 7 is executed by an RRMS on a multi-RAT network and corresponds to the methods in FIG. 1, FIG. 2, FIG. 4, and FIG. 5.

710. The RRMS acquires radio resource management information of at least one base station.

720. The RRMS sends radio resource management information of a neighboring base station of one of the at least one base station to the one of the at least one base station, so that the one of the at least one base station or a multimode UE determines an accessible base station for the multimode UE according to the radio resource management information and identifier information of a base station serving the multimode UE, so that the multimode UE sets up a connection with the accessible base station.

In the embodiment of the present invention, the RRMS may collect and provide radio resource management information of each base station, a serving base station of a multimode UE or the multimode UE determines an accessible base station according to the radio resource management information, so that an RAT network is quickly accessed through the accessible base station. In addition, because the RRMS no longer receives an access request forwarded by the base station, but has delivered radio resource management information to the serving base station before the multimode UE sends an access request, the base station or the multimode UE determines the accessible base station, thereby effectively reducing delay during access.

The foregoing describes the methods for multimode UE access according to the embodiments of the present invention. The following describes a multimode UE, a base station, and an RRMS according to embodiments of the present invention with reference to FIG. 8 to FIG. 12.

FIG. 8 is a schematic structural diagram of a base station 800 according to an embodiment of the present invention. The base station 800 in FIG. 8 includes: a receiving module 810, a determining module 820, and a sending module 830.

The receiving module 810 receives radio resource management information of a neighboring base station of the base station 800 from an RRMS, and is configured to receive an access request message from the multimode UE. After the receiving module 810 receives the access request message, the determining module 820 determines an accessible base station according to radio resource management information of the base station 800 and the radio resource management information of the neighboring base station of the base station 800, where the radio resource management information of the neighboring base station is received by the receiving module 810. The sending module 830 sends, to the multimode UE, an access response message that is generated according to the accessible base station determined by the determining module 820, so that the multimode UE sets up a connection with the accessible base station according to the access response message.

The receiving module 810 further receives, from the multimode UE, identifier information of at least one base station serving the multimode UE, where the determining module 820 determines the accessible base station according to the radio resource management information of the neighboring base station of the base station 800 and the radio resource management information of the base station 800.

According to the embodiment of the present invention, when the accessible base station is the base station 800, the access response message is a connection setup message, or when the accessible base station is one of the at least one base station, the access response message is a connection rejection message, where the connection rejection message includes identifier information of the accessible base station.

According to the embodiment of the present invention, on a multi-RAT network, the base station serving a multimode UE may acquire radio resource management information of a neighboring base station of the base station from an RRMS; when receiving an access request of the multimode UE, determine, according to the radio resource management information, an accessible base station that is appropriate for access by the multimode UE; and notify the multimode UE of the accessible base station, so that the multimode UE is capable of quickly accessing the multi-RAT network through the accessible base station. In addition, the serving base station does not need to initiate a request to the RRMS when receiving the access request, thereby further reducing delay during access by the multimode UE.

For operations and functions of the receiving module 810, the determining module 820, and the sending module 830 of the base station 800, reference may be made to 110, 120, and 130 in the method in FIG. 1. To avoid repetition, no further details are provided herein.

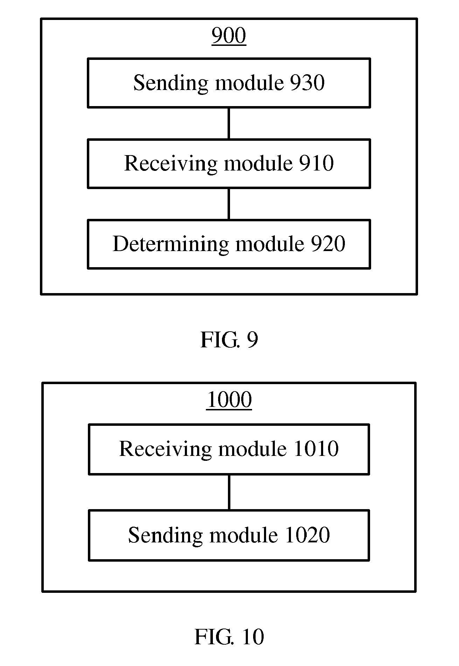

FIG. 9 is a schematic structural diagram of a multimode UE 900 according to another embodiment of the present invention. The multimode UE 900 in FIG. 9 includes: a receiving module 910, a determining module 920, and a sending module 930.

The sending module 930 sends an access request message and identifier information of at least one base station serving the multimode UE 900 to a first base station, so that the first base station determines an accessible base station according to radio resource management information of a neighboring base station of the first base station, radio resource management information of the first base station, and the identifier information of the at least one base station. The receiving module 910 receives, from the first base station, an access response message that is generated by the first base station according to the determined accessible base station after the first base station receives the access request message from the sending module 930. The determining module 920 determines the accessible base station according to the access response message received by the receiving module 910, so as to set up a connection with the accessible base station.

According to the embodiment of the present invention, when the access response message is a connection setup message, the determining module 920 determines that the accessible base station is the first base station, so as to set up a connection with the first base station.

According to the embodiment of the present invention, when the access response message is a connection rejection message, the determining module 920 determines that the accessible base station is one of the at least one base station, where the connection rejection message includes information of the one of the at least one base station, and extracts the information of the one of the at least one base station from the connection rejection message. The sending module 930 sends an access request message to the one of the at least one base station, so as to set up a connection with the one of the at least one base station.

According to the embodiment of the present invention, when the multimode UE needs to access a multi-RAT network, it may initiate an access request to a serving base station, so that the serving base station determines, according to the radio resource management information, an accessible base station that is appropriate for access by the multimode UE, and the multimode UE quickly accesses the multi-RAT network according to information of the accessible base station provided by the serving base station. In addition, the serving base station does not need to initiate an access request to an RRMS when receiving the access request, thereby further reducing delay during access by the multimode UE.

For operations and functions of the receiving module 910, the determining module 920, and the sending module 930 of the multimode UE 900, reference may be made to 210, 220, and 230 in the method in FIG. 2. To avoid repetition, no further details are provided herein.

FIG. 10 is a schematic structural diagram of a base station 1000 according to an embodiment of the present invention. The base station 1000 in FIG. 10 includes a receiving module 1010 and a sending module 1020.

The receiving module 1010 is configured to receive radio resource management information of a neighboring base station of a first base station from an RRMS. The sending module 1020 is configured to send, to a multimode UE, radio resource management information of the first base station and the radio resource management information of the neighboring base station of the first base station, where the radio resource management information of the neighboring base station is received by the receiving module 1010, so that the multimode UE determines an accessible base station according to the radio resource management information of the neighboring base station of the first base station and the radio resource management information of the first base station, and sets up a connection with the accessible base station.

According to the embodiment of the present invention, on a multi-RAT network, a base station may deliver radio resource management information of the base station and radio resource management information of a neighboring base station of the base station to a multimode UE, so that when the multimode UE needs access, it may quickly determine, according to the received radio resource management information, an accessible base station that is appropriate for access by the multimode UE. In addition, the multimode UE may send an access request directly to the accessible base station, thereby further reducing delay during access by the multimode UE.

For operations and functions of the receiving module 1010 and the sending module 1020 of the base station 1000, reference may be made to 410 and 420 in the method in FIG. 4. To avoid repetition, no further details are provided herein.

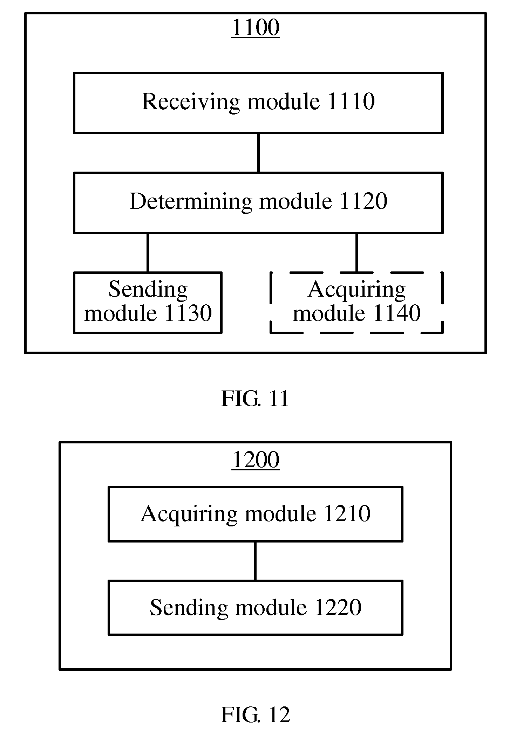

FIG. 11 is a schematic structural diagram of a multimode UE 1100 according to another embodiment of the present invention. The multimode UE 1100 in FIG. 11 includes a receiving module 1110, a determining module 1120, and a sending module 1130.

The receiving module 1110 receives radio resource management information of a neighboring base station of a first base station and radio resource management information of the first base station, where the first base station receives the radio resource management information of the neighboring base station of the first base station from an RRMS. The determining module 1120 determines an accessible base station according to the radio resource management information of the first base station and the radio resource management information of the neighboring base station of the first base station, where the radio resource management information of the neighboring base station is received by the receiving module 1110. The sending module 1130 sends an access request message to the accessible base station determined by the determining module 1120, so as to set up a connection with the accessible base station.

According to the embodiment of the present invention, an acquiring module 1140 is included. The acquiring module 1140 acquires identifier information of at least one base station serving the multimode UE, where the determining module 1120 selects, according to the radio resource management information of the neighboring base station of the first base station, the radio resource management information of the first base station, and the identifier information of the at least one base station, a base station that is appropriate for access as the accessible base station.

According to the embodiment of the present invention, on a multi-RAT network, a certain base station serving a multimode UE may broadcast, in system information of the base station, radio resource management information of the base station and radio resource management information of a neighboring base station of the base station, so that when the multimode UE needs to access the RAT network, it may quickly determine, according to the received radio resource management information, an accessible base station that is appropriate for access by the multimode UE. In addition, the multimode UE may send an access request directly to the accessible base station, thereby further reducing delay during access by the multimode UE.

For operations and functions of the receiving module 1110, the determining module 1120, the sending module 1130, and the acquiring module 1140 of the multimode UE 1100, reference may be made to the method in FIG. 5. To avoid repetition, no further details are provided herein.

FIG. 12 is a schematic structural diagram of an RRMS 1200 according to an embodiment of the present invention. The RRMS 1200 in FIG. 12 includes an acquiring module 1210 and a sending module 1220.

The acquiring module 1210 is configured to acquire radio resource management information of at least one base station. The sending module 1220 is configured to send radio resource management information of a neighboring base station of one of the at least one base station to the one of the at least one base station, where the radio resource management information of the neighboring base station is acquired by the acquiring module 1210, so that the one of the at least one base station or a multimode UE determines an accessible base station for the multimode UE according to the radio resource management information and identifier information of a base station serving the multimode UE, so that the multimode UE sets up a connection with the accessible base station.

In the embodiment of the present invention, the RRMS may collect and provide radio resource management information of each base station, a serving base station of a multimode UE or the multimode UE determines an accessible base station according to the radio resource management information, so that an RAT network is quickly accessed through the accessible base station. In addition, because the RRMS no longer receives an access request forwarded by the base station, but has delivered radio resource management information to the serving base station before the multimode UE sends an access request, the base station or the multimode UE determines the accessible base station, thereby effectively reducing delay during access.

For operations and functions of the acquiring module 1210 and the sending module 1220 of the RRMS 1200, reference may be made to 710 and 720 in the method in FIG. 7. To avoid repetition, no further details are provided herein.

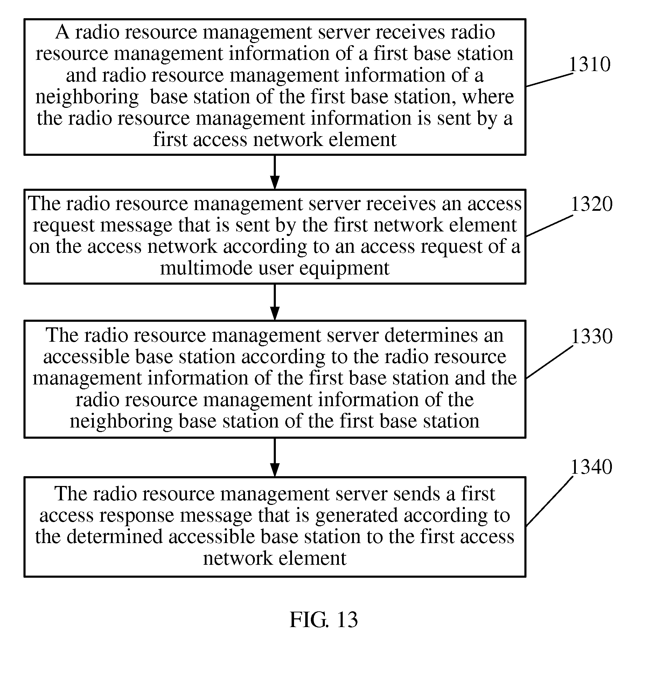

FIG. 13 is a schematic flowchart of a method for multimode UE access according to an embodiment of the present invention. The method in FIG. 13 is executed by an RRMS.

1310. The RRMS receives radio resource management information of a first base station and radio resource management information of a neighboring base station of the first base station, where the radio resource management information is sent by a first access network element.

For example, the first access network element may be a base station (for example, an eNB in an LTE/LTE-A system, an NB in a 3G system, a BTS in a GSM system and a GPRS system) of any type on a multi-RAT network or a controller (for example, an RNC in a WCDMA system, a TD-SCDMA system, and a CDMA 2000 system, or a BSC in a GSM system and a GPRS system) of any type on the multi-RAT network. The neighboring base station of the first base station may be one or more base stations of another type neighboring to the first base station. Specially, the first access network element is the first base station, or the first access network element is a controller for managing the first base station.

For example, the RRMS may be a core controller on the multi-RAT network. The embodiment of the present invention is not limited thereto. The RRMS may also be another functional entity that is capable of performing radio resource management or another functional entity that is capable of providing radio resource management information of each base station. For example, the function may be implemented by a coordinator (coordinator).

For example, the radio resource management information may be information (for example, radio resource condition information and/or load information of each base station) that is reported by each access network element to the RRMS to perform radio resource management. The radio resource management information may be in a form of an information element (IE) in a message. More specifically, the radio resource management information may be in a form of a list or a table (list), and the list or the table may include identifier information of a base station and corresponding radio resource management information. For example, the RRMS may receive the radio resource management information periodically sent by a access network element, and the embodiment of the present invention is not limited thereto.

Optionally, as another embodiment, the radio resource management information may further include at least one of the following factors: QoS of a service of the multimode UE, bandwidth required by the service, a transmission rate of the multimode UE, a measurement result of a metric of a base station, transmit power of the multimode UE, and location information of the multimode UE.

1320. The radio resource management server RRMS receives an access request message that is sent by the first access network element according to an access request of the multimode user equipment.

For example, the multimode UE sends a first access request message to the first access network element. Optionally, the first access request message may further include one or more of the following factors: the QoS of the service of the multimode UE, the bandwidth required by the service, the transmission rate of the multimode UE, the measurement result of the metric of the base station, the transmit power of the multimode UE, and the location information of the multimode UE.

For example, the first access request message may be an access request sent by the multimode UE to a serving base station that the multimode UE camps on, and is used to set up a connection with the serving base station, or may be an access request sent by the multimode UE to a serving base station with which the multimode UE has set up a certain connection, and is used to further set up another connection.

For example, the first access network element sends a second access request message to the RRMS. The second access request message includes one or more of the following factors: the QoS of the service of the multimode UE, the bandwidth required by the service, the transmission rate of the multimode UE, the measurement result of the metric of the base station, the transmit power of the multimode UE, and the location information of the multimode UE.

In an LTE/LTE-A system, metrics of an eNB are RSRP reference signal received power (Reference Signal Receiving Power, reference signal received power RSRP) and RSRQ reference signal received quality (Reference Signal Receiving Quality, reference signal received quality RSRQ) of a reference signal, where the reference signal includes a CRS cell reference signal (Common Reference Signal, cell reference signal CRS), a CSI-RS (Channel State Indication RS, channel state information reference signal (CSI-RS), or a PRS positioning reference signal (Position Reference Signal, PRS positioning reference signal). In a WCDMA system, metrics of an NB are UTRA FDD CPICH RSCP (UMTS Terrestrial Radio Access Frequency Division Duplex Common Pilot Channel Received Signal Code Power, UMTS terrestrial radio access frequency division multiplex (UMTS Terrestrial Radio Access, UTRA) (Frequency Division Duplex, FDD) common pilot channel (Common Pilot Channel, CPICH) received signal code power (Received Signal Code Power, RSCP), a UTRA FDD Carrier RSSI carrier received signal strength indication (Carrier Received Signal Strength Indication, RSSI carrier received signal strength indication), and UTRA FDD CPICH Ec/No. In a TD-SCDMA system, metrics of an NB are a UTRA TDD carrier Carrier RSSI and UTRA TDD P-CCPCH RSCP (Time Division Duplex, Common Control Physical Channel RSCP, TDD time division multiplex) P-common control physical channel RSCP) (Common Control Physical Channel, CCPCH) RSCP. In a CDMA2000 system, metrics of an NB are CDMA2000 1x RTT Pilot Strength radio transmission technology (Radio Transmission Technology Pilot Strength, RTT) radio transmission technology pilot strength (Pilot Strength) and CDMA2000 HRPD Pilot Strength high rate packet data (High Rate Packet Data, Pilot Strength HRPD) high rate packet data pilot strength). In a GSM system, a metric of a BTS is a GSM carrier Carrier RSSI.

1330. After receiving the access request message, the RRMS determines an accessible base station according to the radio resource management information of the neighboring base station of the first base station and the radio resource management information of the first base station.

For example, the RRMS may sequence the first base station and the neighboring base station of the first base station according to the radio resource management information of the first base station and the radio resource management information of the neighboring base station, and select the most appropriate base station (for example, a base station with the lowest load or a base station with the most idle radio resources) as the accessible base station based on a result of the sequencing.

Further, the RRMS may determine the accessible base station, that is, selecting the most appropriate base station, according to the radio resource management information and at least one of the following factors: the QoS of the service of the multimode UE, the bandwidth required by the service, the transmission rate of the multimode UE, the measurement result of the metric of the base station, the transmit power of the multimode UE, and the location information of the multimode UE. The method for determining an accessible base station jointly according to the foregoing information is similar to that in 130 of FIG. 1, and no further details are provided herein.

1340. The RRMS sends a first access response message that is generated according to the determined accessible base station to the first access network element.

For example, the first access response message may be used to notify the first access network element of information relating to the accessible base station, for example, identifier information of the accessible base station. When the first access network element receives the first access response message, it may know which base station the multimode UE should set up a connection with. The embodiment of the present invention is not limited thereto. For example, the RRMS may send a first access response message of a different type to the first access network element according to whether the accessible base station is the first base station or another base station.

For example, the first access network element sends a second access response message that is generated by the determined accessible base station to the multimode UE, so that the multimode UE sets up a connection with the accessible base station according to the access response message.

For example, the second access response message may be used to notify the multimode UE of information relating to the accessible base station, for example, identifier information of the accessible base station. When the multimode UE receives the second access response message, it may know which base station it should set up a connection with. The embodiment of the present invention is not limited thereto. For example, the first access network element may send a second access response message of a different type to the multimode UE according to whether the accessible base station is the first base station or another base station.

According to the embodiment of the present invention, on a multi-RAT network, the RRMS may acquire radio resource management information of a neighboring base station of the RRMS; when receiving an access request of the multimode UE, determine, according to the radio resource management information, an accessible base station that is appropriate for access by the multimode UE; and notify the multimode UE of the accessible base station, so that the multimode UE is capable of quickly accessing the multi-RAT network through the accessible base station.

According to another embodiment of the present invention, the method in FIG. 13 further includes: receiving, by the RRMS, identifier information of at least one base station serving the multimode UE sent by the first access network element, where in 1340, the RRMS selects, according to the radio resource management information of the neighboring base station of the first base station, the radio resource management information of the first base station, and the identifier information of the at least one base station, a base station that is appropriate for access as the accessible base station.

According to another embodiment of the present invention, the method in FIG. 13 further includes: sequencing, by the RRMS, the neighboring base station of the first base station and the first base station according to the radio resource management information of the neighboring base station of the first base station and the radio resource management information of the first base station, where in step 1340, the RRMS selects, according to a result of the sequencing and from an intersection between the neighboring base station and the at least one base station, a base station that is appropriate for access as the accessible base station, or selects, according to a result of the sequencing and the identifier information of the at least one base station and from an intersection between the neighboring base station and the at least one base station and from the first base station, a base station that is appropriate for access as the accessible base station.

For example, the RRMS may first sequence the first base station and the neighboring base station according to the radio resource management information (for example, with the lowest load and/or idle radio resources) of the neighboring base station of the first base station and the radio resource management information of the first base station, and then select, according to a result of the sequencing and the identifier information of the base station serving the multimode UE and from the intersection between the neighboring base station and the at least one base station and from the first base station, a base station with the lowest load and/or with the most idle radio resources as the accessible base station. However, the embodiment of the present invention is not limited thereto. The sequencing may also be performed based on a certain policy of an operator. For example, when the base stations are sequenced, in a case where load conditions and/or radio resource conditions are the same, a base station with a relatively high priority is preferentially selected as the accessible base station.

For example, the identifier information of the at least one base station serving the multimode UE may be included in the access request message. The embodiment of the present invention is not limited thereto. For example, the identifier information of the at least one base station may also be sent by using a separate message.

Because the multimode UE is more likely to successfully access a base station that is serving the multimode UE, an access success rate of the multimode UE may further be improved by selecting the accessible base station from the intersection between the neighboring base station and the base station serving the multimode UE and from the first base station.

According to the embodiment of the present invention, when the accessible base station is the first base station, the second access response message is a connection setup message, or when the accessible base station is one of the at least one base station, the access response message is a connection rejection message, where the connection rejection message includes identifier information of the accessible base station.

For example, if the first base station is determined as the accessible base station in 1340, it indicates that the multimode UE may directly set up a connection with the first base station, and therefore the first access network element may respond a connection setup message to the multimode UE, so as to set up a connection with the multimode UE. If another base station is determined as the accessible base station in 1340, it indicates that the first access network element rejects a connection to be set up between the first base station and the multimode UE, and therefore the second access response message may be a connection rejection message, so as to notify the multimode UE of setting up a connection with the another base station. According to the embodiment of the present invention, returning a corresponding second access response message according to whether the determined accessible base station is the first base station or another base station may further reduce the number of times in sending an access request. For example, if the multimode UE receives a connection setup message, it may directly set up a connection with the first base station, without a need to send an access request to the first base station again.

It should be understood that in a case where the first access network element is a controller for managing the first base station, the RRMS may further receive radio resource management information of the neighboring base station of the first base station, where the radio resource management information of the neighboring base station is sent by a neighboring controller of the controller and is used by the RRMS to determine the accessible base station.

The foregoing describes the method for multimode UE access provided in the embodiment of the present invention from the perspective of an RRMS with reference to FIG. 13.

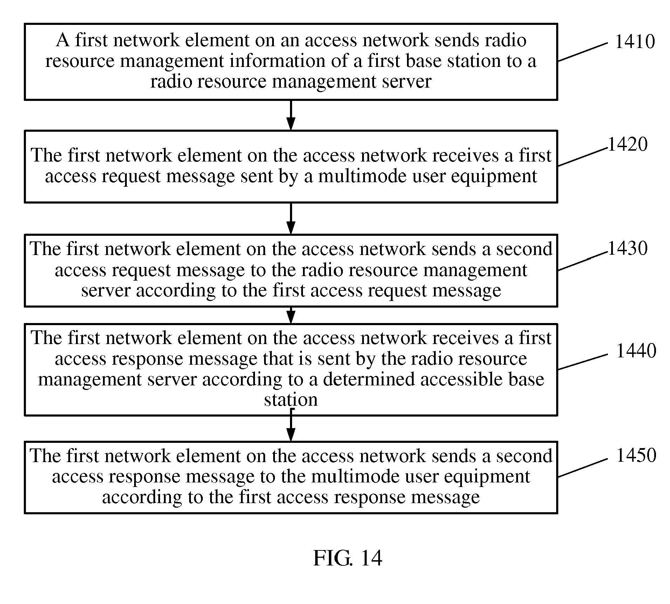

FIG. 14 is a schematic flowchart of a method for multimode UE access according to an embodiment of the present invention. The method in FIG. 14 is executed by an access network element. The method in FIG. 14 corresponds to the method in FIG. 13, and no further details are provided herein.

1410. A first access network element sends radio resource management information of a first base station to an RRMS.

1420. The first access network element receives a first access request message sent by a multimode user equipment.

1430. The first access network element sends a second access request message to the RRMS according to the first access request message, so that the RRMS determines an accessible base station according to radio resource management information of a neighboring base station of the first base station and the radio resource management information of the first base station.

1440. The first access network element receives a first access response message that is sent by the RRMS according to the determined accessible base station.

1450. The first access network element sends a second access response message to the multimode user equipment according to the first access response message.

According to the embodiment of the present invention, on a multi-RAT network, the RRMS may acquire radio resource management information of a neighboring base station of the RRMS; when receiving an access request of the multimode UE, determine, according to the radio resource management information, an accessible base station that is appropriate for access by the multimode UE; and notify the multimode UE of the accessible base station, so that the multimode UE is capable of quickly accessing the multi-RAT network through the accessible base station.

According to the embodiment of the present invention, the first access network element is the first base station, or the first access network element is a controller for managing the first base station.

Optionally, as another embodiment, the first access network element sends identifier information of at least one base station serving the multimode user equipment to the RRMS, so that the RRMS determines the accessible base station according to the radio resource management information of the first base station and the radio resource management information of the neighboring base station of the first base station.

According to the embodiment of the present invention, the second access request message further includes at least one of the following factors: QoS of a service of the multimode UE, bandwidth required by the service, a transmission rate of the multimode UE, a measurement result of a metric of a base station, transmit power of the multimode UE, and location information of the multimode UE, so that the radio resource management server determines the accessible base station according to the information included in the second access response message, the radio resource management information of the neighboring base station of the first base station and the radio resource management information of the first base station.

According to the embodiment of the present invention, the radio resource management information may include at least one of the following factors: QoS of a service of the multimode UE, bandwidth required by the service, a transmission rate of the multimode UE, a measurement result of a metric of a base station, transmit power of the multimode UE, location information of the multimode UE, radio resource condition information of the base station, and load information of the base station.

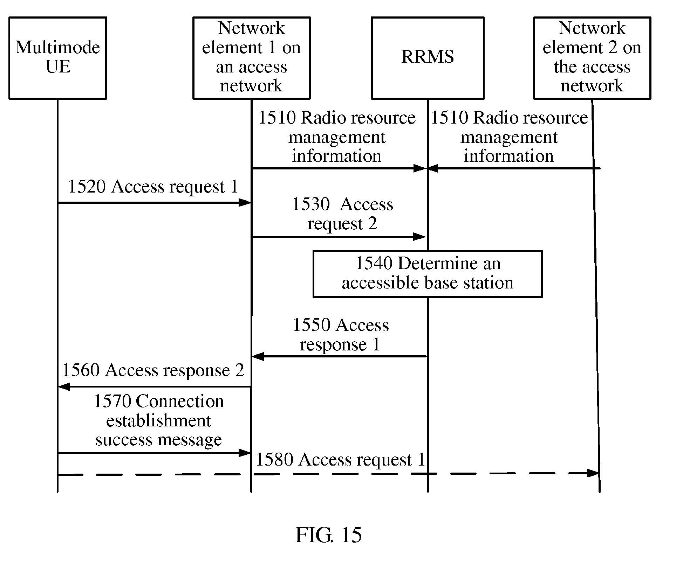

FIG. 15 is a schematic flowchart of a process for multimode UE access according to an embodiment of the present invention. FIG. 15 is an example of the embodiments of FIG. 13 and FIG. 14.

1510. An RRMS receives radio resource management information of a first base station and radio resource management information of a neighboring base station of the first base station, where the radio resource management information is sent by access network element 1 on an access network. The definition of the radio resource management information in this embodiment is similar to the definition of the radio resource management information in the foregoing embodiments, and no further details are provided herein.

For example, access network element 1 on the access network may be the first base station or a controller (for example, an RNC or a BSC) for managing the first base station.

Optionally, when access network element 1 on the access network is the first base station, the RRMS may further receive the radio resource management information of the neighboring base station of the first base station, where the radio resource management information of the neighboring base station is sent by access network element 2 (for example, an RNC or a BSC) for managing the neighboring base station of the first base station.

1520. A multimode UE sends an access request 1 message to access network element 1 on the access network, where the access request 1 message includes information (for example, an identifier of a base station) about a base station serving the multimode UE. For example, in a WCDMA system, the access request 1 message may be an RRCConnectionRequest message during setup of an RRC (Radio Resource Control, Radio Resource Control protocol) connection. Optionally, the access request 1 message may not include information of the base station serving the multimode UE.

1530. The RRMS receives an access request 2 message that is sent by access network element 1 on the access network according to the access request of the multimode user equipment.

For example, the access request 2 message includes at least one of the following factors: QoS of a service of the multimode UE, bandwidth required by the service, a transmission rate of the multimode UE, a measurement result of a metric of a base station, transmit power of the multimode UE, and location information of the multimode UE.

1540. The RRMS determines an accessible base station according to the radio resource management information of the neighboring base station of the first base station and the radio resource management information of the first base station.

For example, the RRMS may select the most appropriate base station (for example, the most appropriate base station may be one or more of the following base stations: a base station with the strongest signal strength, a base station that achieves the minimum transmit power for the multimode UE, a base station with the lowest load, a base station with the most idle radio resources, and a base station that achieves the largest system throughput after access by the multimode UE) as the accessible base station according to radio resource management information of each base station and according to at least one of the following factors: the QoS of the service of the multimode UE, the bandwidth required by the service, the transmission rate of the multimode UE, the measurement result of the metric of the base station, the transmit power of the multimode UE, and the location information of the multimode UE.

1550. The RRMS sends an access response 1 message that is generated according to the determined accessible base station to access network element 1 on the access network. The access response 1 message may include an identifier of the accessible base station.

1560. Access network element 1 on the access network sends an access response 2 message to the multimode UE.

If access network element 1 on the access network selects the first base station as the accessible base station in 1540, the access response message may be a connection setup message (for example, an RRCConnectionSetup message during setup of an RRC connection), indicating successful access. If access network element 1 on the access network selects the neighboring base station of the first base station as the accessible base station in 1540, the access response message may be a connection rejection message (for example, an RRCConnectionReject message during setup of an RRC connection), where the connection rejection message may include information (for example, an identifier of the neighboring base station of the first base station) about the accessible base station. In other words, access network element 1 on the access network selects a base station with lighter load and/or with more idle radio resources as the accessible base station for the multimode UE.

1570. The multimode UE sends a connection setup success message to access network element 1 on the access network.

If the access response message received by the multimode UE from access network element 1 on the access network is a connection setup message, the multimode UE feeds back a connection setup success message (for example, an RRCConnectionSetupComplete message in an RRC connection) to access network element 1 on the access network, indicating that setup of the connection is completed, that is, the first base station is successfully accessed.

1580. The multimode UE sends an access request 1 to the neighboring base station of the first base station or access network element 2 on the access network.

If the access response message received by the multimode UE from access network element 1 on the access network is a connection rejection message, it indicates that the multimode UE fails to access the first base station, and therefore the multimode UE may send a new access request message to the accessible base station according to information of the accessible base station provided in the access response message. For example, if the accessible base station is a base station managed by access network element 1, the access request 1 is still sent to access network element 1 on the access network. Alternatively, if the accessible base station is managed by network element 2 on the access network, the access request 1 is sent to access network element 2 on the access network.

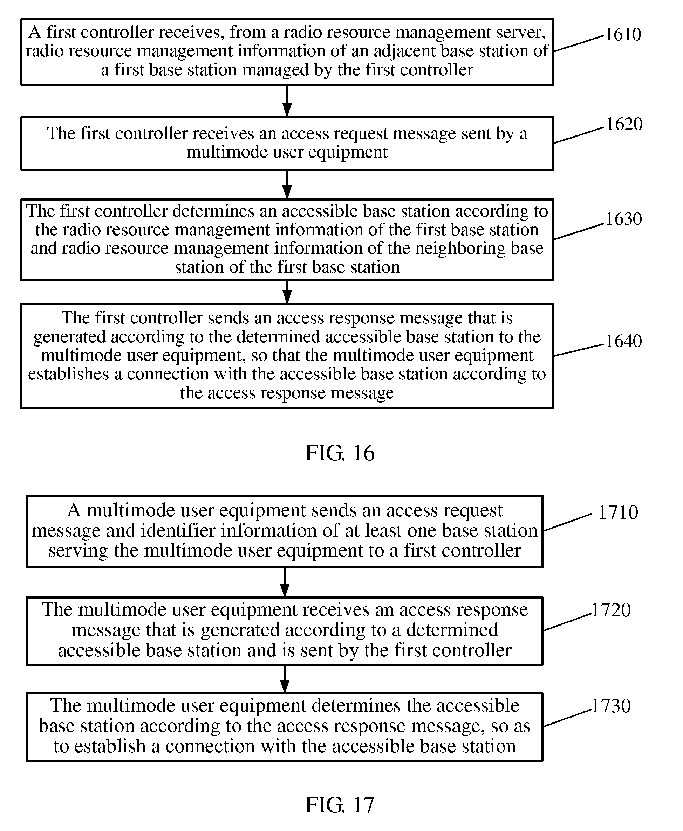

FIG. 16 is a schematic flowchart of a method for multimode UE access according to an embodiment of the present invention. The method in FIG. 16 is executed by a controller.

1610. A first controller receives, from an RRMS, radio resource management information of a neighboring base station of a base station managed by the first controller.

For example, the first controller may be a controller (for example, an RNC in a 3G system, a BSC in a 2G system) of any type on a multi-RAT network, and a neighboring controller of the first controller may be one or more controllers of another type neighboring to the first controller.

For example, the RRMS may be a core controller on the multi-RAT network. The embodiment of the present invention is not limited thereto. The RRMS may also be another functional entity that is capable of performing radio resource management or another functional entity that is capable of providing radio resource management information of each base station.

For example, the radio resource management information may be information (for example, radio resource condition information and/or load information of a base station managed by each controller) that is reported by each controller to the RRMS to perform radio resource management. The radio resource management information may be in a form of an information element (IE) in a message. More specifically, the radio resource management information may be in a form of a list or a table (list), and the list or the table may include identifier information of a base station and corresponding radio resource management information. For example, the controller may receive the radio resource management information periodically sent by the RRMS, and the embodiment of the present invention is not limited thereto.

1620. The first controller receives an access request message from the multimode UE.

For example, the access request message may be an access request that is sent by the multimode UE to a serving controller of the multimode UE when the multimode UE is in an idle state (may receive a broadcast message and a paging message), and is used to set up a connection with the serving controller, or may be an access request that is sent by the multimode UE to a serving controller with which the multimode UE has set up a connection, and is used to further set up another connection, where the access request message of the multimode UE that is received by the first controller is forwarded (transparently transmitted) through a base station.

1630. After receiving the access request message, the first controller determines an accessible base station according to the radio resource management information of the neighboring base station of the base station managed by the first controller and radio resource management information of the base station managed by the first controller.

For example, the first controller manages multiple base stations and maintains radio resource management information of the base stations managed by the first controller. The first controller may sequence the base station managed by the first controller and the base station managed by the neighboring controller according to the radio resource management information of the base station managed by the first controller and the radio resource management information of the base station managed by the neighboring controller, and select the most appropriate base station (for example, a base station with the lowest load or a base station with the most idle radio resources) as the accessible base station based on a result of the sequencing. Alternatively, the RRMS may also perform the sequencing operation and send a result of the sequencing to the first controller, and the first controller determines the accessible base station based on the received result of the sequencing. However, the embodiment of the present invention is not limited thereto. The sequencing operation may also be performed based on a certain policy of an operator. For example, a different weighting factor may be given to each base station according to priorities of the base stations during the sequencing, so that a base station with a relatively high priority is preferentially accessed. For example, in a case where load of the base station managed by the first controller is not heavy and/or relatively many idle resources are available, the base station managed by the first controller is preferentially selected as the accessible base station.

Further, the first controller may further receive at least one of the following factors sent by the multimode UE: QoS of a service of the multimode UE, bandwidth required by the service, a transmission rate of the multimode UE, a measurement result of a metric of each base station, transmit power of the multimode UE, and location information (for example, being carried in the access request message) of the multimode UE. In addition, the first controller determines the accessible base station, that is, selecting the most appropriate base station, according to the radio resource management information and at least one of the following factors: the QoS of the service of the multimode UE, the bandwidth required by the service, the transmission rate of the multimode UE, the measurement result of the metric of each base station, the transmit power of the multimode UE, and the location information of the multimode UE. The method for determining an accessible base station jointly according to the foregoing information is similar to that in 130 of FIG. 1, and no further details are provided herein.

1640. The first controller sends an access response message that is generated according to the determined accessible base station to the multimode UE, so that the multimode UE sets up a connection with the accessible base station according to the access response message.

For example, the access response message may be used to notify the multimode UE of information relating to the accessible base station, for example, identifier information of the accessible base station. When the multimode UE receives the access response message, it may know which base station it should set up a connection with. The embodiment of the present invention is not limited thereto. For example, the first controller may send an access response message of a different type to the multimode UE according to whether the accessible base station is the base station managed by the first controller or a base station managed by another controller.

According to the embodiment of the present invention, on a multi-RAT network, the controller to which a base station serving a multimode UE belongs may acquire radio resource management information of a neighboring base station of the base station from an RRMS; when receiving an access request of the multimode UE, determine, according to the radio resource management information, an accessible base station that is appropriate for access by the multimode UE; and notify the multimode UE of the accessible base station, so that the multimode UE is capable of quickly accessing the multi-RAT network through the accessible base station. In addition, the controller to which the serving base station belongs does not need to initiate an access request to the RRMS when receiving the access request, thereby further reducing delay during access by the multimode UE.

According to another embodiment of the present invention, the method in FIG. 16 further includes: receiving, by the first controller from the multimode UE, identifier information of at least one base station serving the multimode UE, where in 1630, the first controller selects, according to the radio resource management information of the neighboring base station of the base station managed by the first controller, the radio resource management information of the base station managed by the first controller, and the identifier information of the at least one base station, a base station that is appropriate for access as the accessible base station.

According to another embodiment of the present invention, the method in FIG. 16 further includes: sequencing, by the first controller according to the radio resource management information of the neighboring base station of the base station managed by the first controller and the radio resource management information of the base station managed by the first controller, the neighboring base station of the base station managed by the first controller and the base station managed by the first controller, where in 1630, the first controller selects, according to a result of the sequencing and from an intersection between the neighboring base station and the at least one base station, a base station that is appropriate for access as the accessible base station, or selects, according to a result of the sequencing and the identifier information of the at least one base station and from an intersection between the neighboring base station and the at least one base station and from the base station managed by the first controller, a base station that is appropriate for access as the accessible base station.

For example, the first controller may first sequence the base station managed by the first controller and the neighboring base station according to the radio resource management information (for example, with the lowest load and/or idle radio resources) of the neighboring base station of the base station managed by the first controller and the radio resource management information of the base station managed by the first controller, and then select, according to a result of the sequencing and the identifier information of the base station serving the multimode UE and from the intersection between the neighboring base station and the at least one base station and from the base station managed by the first controller, a base station with the lowest load and/or with the most idle radio resources as the accessible base station. However, the embodiment of the present invention is not limited thereto. The sequencing may also be performed based on a certain policy of an operator. For example, when the base stations are sequenced, in a case where load conditions and/or radio resource conditions are the same, a base station with a relatively high priority is preferentially selected as the accessible base station.

For example, the identifier information of the at least one base station serving the multimode UE may be included in the access request message. The embodiment of the present invention is not limited thereto. For example, the identifier information of the at least one base station may also be sent by using a separate message.

Because the multimode UE is more likely to successfully access a base station that is serving the multimode UE, an access success rate of the multimode UE may further be improved by selecting the accessible base station from the intersection between the neighboring base station and the base station serving the multimode UE and from the base station managed by the first controller.

According to the embodiment of the present invention, when the accessible base station is the base station managed by the first controller, the access response message is a connection setup message, or when the accessible base station is one of the at least one base station, the access response message is a connection rejection message, where the connection rejection message includes identifier information of the accessible base station.

For example, if the base station managed by the first controller is determined as the accessible base station in 1630, it indicates that the multimode UE may directly set up a connection with the base station managed by the first controller, and therefore the first controller may respond a connection setup message to the multimode UE, so as to set up a connection with the multimode UE.

If another base station is determined as the accessible base station in 1630, it indicates that the first controller rejects setting up a connection with the multimode UE, and therefore the access response message may be a connection rejection message, so as to notify the multimode UE of setting up a connection with the another base station.

According to the embodiment of the present invention, returning a corresponding access response message according to whether the determined accessible base station is the base station managed by the first controller or another base station may further reduce the number of times in sending an access request. For example, if the multimode UE receives a connection setup message, it may directly set up a connection with the first controller, without a need to send an access request to the first controller again.

The foregoing describes the method for multimode UE access provided in the embodiment of the present invention from the perspective of a controller with reference to FIG. 16.

FIG. 17 is a schematic flowchart of a method for multimode UE access according to another embodiment of the present invention. The method in FIG. 17 is executed by a multimode UE and corresponds to the method in FIG. 16, and no further details are provided herein.

1710. The multimode UE sends an access request message and identifier information of at least one base station serving the multimode UE to a first controller, so that the first controller determines an accessible base station according to radio resource management information of a neighboring base station of a base station managed by the first controller, radio resource management information of the base station managed by the first controller, and the identifier information of the at least one base station.

1720. The multimode UE receives, from the first controller, an access response message that is generated according to the determined accessible base station.

1730. The multimode UE determines the accessible base station according to the access response message, so as to set up a connection with the accessible base station.

According to the embodiment of the present invention, when a multimode UE needs to access a multi-RAT network, it may initiate an access request to a controller to which a serving base station belongs, so that the serving base station determines, according to the radio resource management information, an accessible base station that is appropriate for access by the multimode UE, and the multimode UE quickly accesses the multi-RAT network according to information of the accessible base station provided by the controller to which the serving base station belongs. In addition, the controller to which the serving base station belongs does not need to initiate an access request to an RRMS when receiving the access request, thereby further reducing delay during access by the multimode UE.

According to the embodiment of the present invention, in 1730, when the access response message is a connection setup message, the multimode UE determines that the accessible base station is the base station managed by the first controller, so as to set up a connection with the base station managed by the first controller.

According to the embodiment of the present invention, in 1730, when the access response message is a connection rejection message, the multimode UE determines that the accessible base station is one of the at least one base station, where the connection rejection message includes information of the one of the at least one base station; the multimode UE extracts the information of the one of the at least one base station from the connection rejection message; and the multimode UE sends another access request message to the one of the at least one base station, so as to set up a connection with the one of the at least one base station.

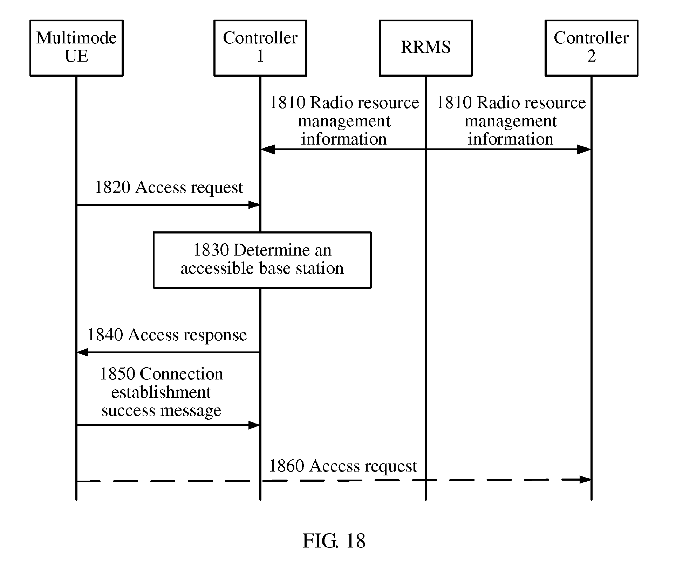

FIG. 18 is a flowchart of a process for multimode UE access according to another embodiment of the present invention. FIG. 18 is an example of the embodiments of FIG. 16 and FIG. 17.

1810. An RRMS periodically sends radio resource management information (for example, load and/or resource condition information) of each base station and radio resource management information of a neighboring base station of each base station to controller 1.

1820. A multimode UE sends an access request message to controller 1 to which base station 1 (for example, an NB) serving the multimode UE belongs, where the access request includes information (for example, an identifier of a base station) about a base station serving the multimode UE.

1830. Controller 1 maintains an internal list (or table) according to the received radio resource management information of a neighboring base station. For example, controller 1 may sequence a base station managed by controller 1 and a neighboring base station of the base station managed by controller 1 according to the sizes of load, and/or sequence a base station managed by controller 1 and a neighboring base station of the base station managed by controller 1 according to the numbers of idle radio resources. When base station 1 managed by controller 1 receives an access request of the multimode UE, it sequences, according to a result of the sequencing and identifier information of the base station serving the multimode UE, the base station serving the multimode UE, and selects a base station with the lowest load and/or selects a base station with the most idle radio resources as an accessible base station of the multimode UE. Objects for the sequencing are the base station managed by controller 1 and a base station that is neighboring to the base station managed by controller 1, serves the multimode UE, and is included in the access request. In other words, an intersection, which is between the neighboring base station of the base station managed by controller 1 and the base station serving the multimode UE, and the base station managed by controller 1 are sequenced.

1840. Controller 1 sends an access response message to the multimode UE. If controller 1 selects a base station managed by controller 1 as the accessible base station in 1830, the access response message may be a connection setup message (for example, an RRCConnectionSetup message during setup of an RRC connection), indicating successful access. If the base station managed by controller 1 selects the base station that is neighboring to the base station managed by controller 1 and serves the multimode UE, namely, base station 2 (for example, a BTS), as the accessible base station in 1830, the access response message may be a connection rejection message (for example, an RRCConnectionReject message during setup of an RRC connection), where the connection rejection message may include information (for example, an identifier of base station 2) about the accessible base station. In other words, the base station managed by controller 1 selects a base station with lighter load and/or with more idle radio resources as the accessible base station for the multimode UE.

1850. If the access response message received by the multimode UE from controller 1 is a connection setup message, the multimode UE feeds back a connection setup success message (for example, an RRCConnectionSetupComplete message in an RRC connection) to controller 1, indicating that setup of the connection is completed, that is, the base station managed by controller 1 is successfully accessed.

1860. If the access response message received by the multimode UE from the base station managed by controller 1 is a connection rejection message, it indicates that the multimode UE fails to access the base station managed by controller 1, and therefore the multimode UE may send a new access request message to an accessible base station according to information of the accessible base station provided in the access response message.

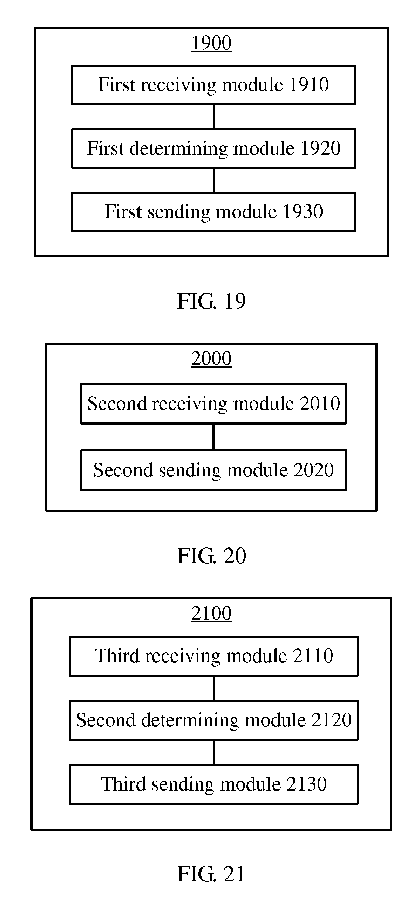

FIG. 19 is a schematic structural diagram of an RRMS 1900 according to another embodiment of the present invention. The RRMS 1900 includes a first receiving module 1910, a first determining module 1920, and a first sending module 1930.

The first receiving module 1910 receives radio resource management information of a first base station and radio resource management information of a neighboring base station of the first base station, where the radio resource management information is sent by a first access network element, and receives an access request message that is sent by the first access network element according to an access request of a multimode user equipment. The first determining module 1920 determines an accessible base station according to the radio resource management information of the first base station and the radio resource management information of the neighboring base station of the first base station, where the radio resource management information is received by the first receiving module. The first sending module 1930 sends, to the first access network element, an access response message that is generated according to the accessible base station determined by the first determining module.

According to the embodiment of the present invention, on a multi-RAT network, the RRMS may acquire radio resource management information of a neighboring base station of the RRMS; when receiving an access request of the multimode UE, determine, according to the radio resource management information, an accessible base station that is appropriate for access by the multimode UE; and notify the multimode UE of the accessible base station, so that the multimode UE is capable of quickly accessing the multi-RAT network through the accessible base station.

Optionally, as another embodiment, the first receiving module 1910 further receives identifier information of at least one base station serving the multimode user equipment, where the identifier information of the at least one base station is sent by the first access network element, where the first determining module 1920 selects, according to the radio resource management information of the first base station, the radio resource management information of the neighboring base station of the first base station, and the identifier information of the at least one base station, a base station that is appropriate for access as the accessible base station.

Optionally, as another embodiment, the first determining module 1920 is further configured to sequence the neighboring base station of the first base station and the first base station according to the radio resource management information of the neighboring base station of the first base station and the radio resource management information of the first base station, where the first determining module 1920 selects, according to a result of the sequencing and from an intersection between the neighboring base station and the at least one base station, a base station that is appropriate for access as the accessible base station, or selects, according to a result of the sequencing and the identifier information of the at least one base station and from an intersection between the neighboring base station and the at least one base station and from the first base station, a base station that is appropriate for access as the accessible base station.

According to the embodiment of the present invention, the first access network element is the first base station, or the first access network element is a controller for managing the first base station.

For operations and functions of units of the RRMS 1900, reference may be made to the method in FIG. 13. To avoid repetition, no further details are provided herein.

FIG. 20 is a schematic structural diagram of an access network element 2000 according to another embodiment of the present invention. The 2000 includes a second receiving module 2010 and a second sending module 2020.

The second receiving module 2010 receives a first access request message sent by a multimode user equipment and receives a first access response message that is sent by the RRMS according to a determined accessible base station. The second sending module 2020 sends radio resource management information of a first base station to the RRMS and sends a second access request message to the RRMS according to the first access request message received by the second receiving module, so that the RRMS determines an accessible base station according to radio resource management information of a neighboring base station of the first base station and the radio resource management information of the first base station and sends a second access response message to the multimode user equipment according to the first access response message received by the second receiving module.

According to the embodiment of the present invention, on a multi-RAT network, the RRMS may acquire radio resource management information of a neighboring base station of the RRMS; when receiving an access request of the multimode UE, determine, according to the radio resource management information, an accessible base station that is appropriate for access by the multimode UE; and notify the multimode UE of the accessible base station, so that the multimode UE is capable of quickly accessing the multi-RAT network through the accessible base station.

Optionally, as another embodiment, the second sending module 2020 further sends identifier information of at least one base station serving the multimode user equipment to the RRMS, so that the RRMS determines the accessible base station according to the radio resource management information of the first base station and the radio resource management information of the neighboring base station of the first base station.

According to the embodiment of the present invention, the first access network element is the first base station, or the first access network element is a controller for managing the first base station.

For operations and functions of units of the access network element 2000 on the access network, reference may be made to the method in FIG. 14. To avoid repetition, no further details are provided herein.

FIG. 21 is a schematic structural diagram of a controller 2100 according to another embodiment of the present invention. The controller 2100 includes a third receiving module 2110, a second determining module 2120, and a third sending module 2130.

The third receiving module 2110 receives radio resource management information of a neighboring base station of a first base station managed by a first controller from an RRMS and receives an access request message sent by the multimode user equipment. The second determining module 2120 determines an accessible base station according to radio resource management information of the first base station and the radio resource management information of the neighboring base station of the first base station, where the radio resource management information is received by the third receiving module. The third sending module 2130 sends, to the multimode user equipment, an access response message that is generated according to the accessible base station determined by the second determining module, so that the multimode user equipment sets up a connection with the accessible base station according to the access response message.

According to the embodiment of the present invention, on a multi-RAT network, the controller to which a base station serving a multimode UE belongs may acquire radio resource management information of a neighboring base station of the base station from an RRMS; when receiving an access request of the multimode UE, determine, according to the radio resource management information, an accessible base station that is appropriate for access by the multimode UE; and notify the multimode UE of the accessible base station, so that the multimode UE is capable of quickly accessing the multi-RAT network through the accessible base station. In addition, the controller to which the serving base station belongs does not need to initiate an access request to the RRMS when receiving the access request, thereby further reducing delay during access by the multimode UE.

Optionally, as another embodiment, the third receiving module 2110 further receives identifier information of at least one base station serving the multimode user equipment, where the identifier information of the at least one base station is sent by the multimode user equipment, where the second determining module 2120 selects, according to the radio resource management information of the first base station, the radio resource management information of the neighboring base station, and the identifier information of the at least one base station, a base station that is appropriate for access as the accessible base station.

Optionally, as another embodiment, the second determining module 2120 further sequences the neighboring base station and the first base station according to the radio resource management information of the first base station and the radio resource management information of the neighboring base station of the first base station, and the second determining module 2120 selects, according to a result of the sequencing and the identifier information of the at least one base station and from an intersection between the neighboring base station and the at least one base station and from the first base station, a base station that is appropriate for access as the accessible base station.

According to the embodiment of the present invention, when the accessible base station is the first base station, the access response message is a connection setup message, or when the accessible base station is one of the at least one base station, the access response message is a connection rejection message, where the connection rejection message includes identifier information of the accessible base station.

For operations and functions of units of the controller 2100, reference may be made to the method in FIG. 16. To avoid repetition, no further details are provided herein.

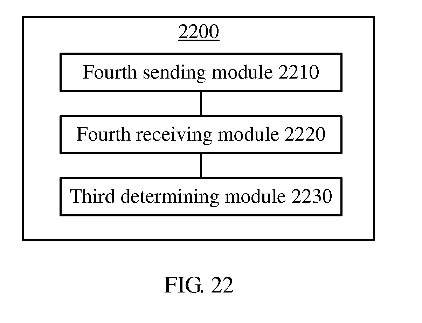

FIG. 22 is a schematic structural diagram of a multimode user equipment according to another embodiment of the present invention.

A fourth sending module 2210 sends an access request message and identifier information of at least one base station serving the multimode user equipment to a first controller, so that the first controller determines an accessible base station according to radio resource management information of a neighboring base station of a first base station managed by the first controller, radio resource management information of the first base station, and the identifier information of the at least one base station. A fourth receiving module 2220 receives an access response message that is sent by the first controller and is generated according to the determined accessible base station. The third determining module 2230 determines the accessible base station according to the access response message received by the fourth receiving module, so as to set up a connection with the accessible base station.

According to the embodiment of the present invention, when the multimode UE needs to access a multi-RAT network, it may initiate an access request to a controller to which a serving base station belongs, so that the serving base station determines, according to the radio resource management information, an accessible base station that is appropriate for access by the multimode UE, and the multimode UE quickly accesses the multi-RAT network according to information of the accessible base station provided by the controller to which the serving base station belongs. In addition, the controller to which the serving base station belongs does not need to initiate an access request to an RRMS when receiving the access request, thereby further reducing delay during access by the multimode UE.

According to the embodiment of the present invention, when the access response message is a connection setup message, the third determining module 2230 determines that the accessible base station is the first base station, so as to set up a connection with the first base station.

Optionally, as another embodiment, when the access response message is a connection rejection message, the third determining module 2230 determines that the accessible base station is one of the at least one base station, where the connection rejection message includes identifier information of the one of the at least one base station, the third determining module 2230 further extracts the identifier information of the one of the at least one base station from the connection rejection message, and the fourth sending module 2210 further sends another access request message to the one of the at least one base station, so as to set up a connection with the one of the at least one base station.

For operations and functions of units of the multimode user equipment, reference may be made to the method in FIG. 17. To avoid repetition, no further details are provided herein.

An embodiment of the present invention further provides a communications system that may include the base station, the multimode UE and the RRMS in the foregoing embodiments.

In the present invention, with respect to characteristics of a multi-RAT network, power savings and throughput conditions are considered, and delay during access is effectively reduced, thereby solving the problem about how a multimode UE accesses a multi-RAT base station.

In addition, according to the embodiments of the present invention, the case where the multimode UE attempts to access an inappropriate base station is avoided, which reduces an access failure rate, thereby improving throughput of a user in an average sense.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on the particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. A part of or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit.

When the functions are implemented in a form of a software functional module and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium and includes several instructions for instructing a computer device (which may be a personal computer, a server, or a network device or the like) to perform all or a part of the steps of the methods described in the embodiments of the present invention. The foregoing storage medium includes: any medium that is capable of storing program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the appended claims.

## Claims

1. A method for multimode user equipment access, comprising:
receiving, by a first base station, radio resource management information of a neighboring base station of the first base station from a radio resource management server;
receiving, by the first base station, an access request message from the multimode user equipment;
determining, by the first base station, an accessible base station according to the radio resource management information of the neighboring base station and radio resource management information of the first base station; and
sending, by the first base station, an access response message that is generated according to the determined accessible base station to the multimode user equipment, so that the multimode user equipment sets up a connection with the accessible base station according to the access response message.

2. The method according to claim 1, further comprising: receiving, by the first base station from the multimode user equipment, identifier information of at least one base station serving the multimode user equipment, wherein:
the determining, by the first base station, an accessible base station according to the radio resource management information of the neighboring base station and radio resource management information of the first base station comprises:
selecting, by the first base station according to the radio resource management information of the neighboring base station, the radio resource management information of the first base station, and the identifier information of the at least one base station, a base station that is appropriate for access as the accessible base station.

3. The method according to claim 2, further comprising:
sequencing, by the first base station, the neighboring base station and the first base station according to the radio resource management information of the neighboring base station and the radio resource management information of the first base station, wherein:
the selecting, by the first base station according to the radio resource management information of the neighboring base station, the radio resource management information of the first base station, and the identifier information of the at least one base station, a base station that is appropriate for access as the accessible base station comprises:
selecting, by the first base station according to a result of the sequencing and the identifier information of the at least one base station and from an intersection between the neighboring base station and the at least one base station and from the first base station, the base station that is appropriate for access as the accessible base station.

4. The method according to any one of claims 1 to 3, wherein when the accessible base station is the first base station, the access response message is a connection setup message,
or
when the accessible base station is one of the at least one base station, the access response message is a connection rejection message, and the connection rejection message comprises identifier information of the accessible base station.

5. The method according to any one of claims 1 to 4, wherein the determining, by the first base station, an accessible base station according to the radio resource management information of the neighboring base station and radio resource management information of the first base station comprises:
determining, by the first base station, the accessible base station according to the radio resource management information of the neighboring base station, the radio resource management information of the first base station, and at least one of the following factors: quality of service of a service of the multimode UE, bandwidth required by the service, a transmission rate of the multimode UE, a measurement result of a metric of a base station, transmit power of the multimode UE, and location information of the multimode UE.

6. A method for multimode user equipment access, comprising:
sending, by a multimode user equipment, an access request message and identifier information of at least one base station serving the multimode user equipment to a first base station, so that the first base station determines an accessible base station according to radio resource management information of a neighboring base station of the first base station, radio resource management information of the first base station, and the identifier information of the at least one base station;
receiving, by the multimode user equipment from the first base station, an access response message that is generated according to the determined accessible base station; and
determining, by the multimode user equipment, the accessible base station according to the access response message, so as to set up a connection with the accessible base station.

7. The method according to claim 6, wherein the determining, by the multimode user equipment, the accessible base station according to the access response message, so as to set up a connection with the accessible base station comprises:
when the access response message is a connection setup message, determining, by the multimode user equipment that the accessible base station is the first base station, so as to set up a connection with the first base station.

8. The method according to claim 6, wherein the determining, by the multimode user equipment, the accessible base station according to the access response message, so as to set up a connection with the accessible base station comprises:
when the access response message is a connection rejection message, determining, by the multimode user equipment that the accessible base station is one of the at least one base station, wherein the connection rejection message comprises identifier information of the one of the at least one base station;
extracting, by the multimode user equipment, the identifier information of the one of the at least one base station from the connection rejection message; and
sending, by the multimode user equipment, another access request message to the one of the at least one base station, so as to set up a connection with the one of the at least one base station.

9. A method for multimode user equipment access, comprising:
receiving, by a first base station, radio resource management information of a neighboring base station of the first base station from a radio resource management server; and
sending, by the first base station, the radio resource management information of the neighboring base station and radio resource management information of the first base station to a multimode user equipment, so that the multimode user equipment determines an accessible base station according to the radio resource management information of the neighboring base station and the radio resource management information of the first base station, and sets up a connection with the accessible base station.

10. The method according to claim 9, wherein the sending the radio resource management information of the neighboring base station and the radio resource management information of the first base station to a multimode user equipment comprises:
broadcasting, by the first base station, the radio resource management information of the neighboring base station and the radio resource management information of the first base station to the multimode user equipment.

11. A method for multimode user equipment access, comprising:
receiving, by a multimode user equipment from a first base station, radio resource management information of a neighboring base station of the first base station and radio resource management information of the first base station, wherein the first base station receives the radio resource management information of the neighboring base station from a radio resource management server;
determining, by the multimode user equipment, an accessible base station according to the radio resource management information of the neighboring base station and the radio resource management information of the first base station; and
sending, by the multimode user equipment, an access request message to the accessible base station, so as to set up a connection with the accessible base station.

12. The method according to claim 11, further comprising:
acquiring, by the multimode user equipment, identifier information of at least one base station serving the multimode user equipment, wherein:
the determining, by the multimode user equipment, an accessible base station according to the radio resource management information of the neighboring base station and the radio resource management information of the first base station comprises:
selecting, by the multimode user equipment according to the radio resource management information of the neighboring base station, the radio resource management information of the first base station, and the identifier information of the at least one base station, a base station that is appropriate for access as the accessible base station.

13. The method according to claim 12, further comprising:
sequencing, by the multimode user equipment, the neighboring base station and the first base station according to the radio resource management information of the neighboring base station and the radio resource management information of the first base station, wherein:
the selecting, by the multimode user equipment according to the radio resource management information of the neighboring base station, the radio resource management information of the first base station, and the identifier information of the at least one base station, a base station that is appropriate for access as the accessible base station comprises:
selecting, by the multimode user equipment according to a result of the sequencing and the identifier information of the at least one base station and from an intersection between the neighboring base station and the at least one base station and from the first base station, a base station that is appropriate for access as the accessible base station.

14. The method according to any one of claims 11 to 13, wherein the determining, by the multimode user equipment, an accessible base station according to the radio resource management information of the neighboring base station and the radio resource management information of the first base station comprises:
determining, by the multimode user equipment, the accessible base station according to the radio resource management information of the neighboring base station of the first base station, the radio resource management information of the first base station, and at least one of the following factors: quality of service of a service of the multimode UE, bandwidth required by the service, a transmission rate of the multimode UE, a measurement result of a metric of a base station, transmit power of the multimode UE, and location information of the multimode UE.

15. A method for multimode user equipment access, comprising:
acquiring, by a radio resource management server, radio resource management information of at least one base station; and
sending, by the radio resource management server, radio resource management information of a neighboring base station of one of the at least one base station to the one of the at least one base station, so that the one of the at least one base station or a multimode user equipment determines an accessible base station for the multimode user equipment according to the radio resource management information and identifier information of a base station serving the multimode user equipment, so that the multimode user equipment sets up a connection with the accessible base station.

16. A base station, comprising:
a receiving module, configured to receive radio resource management information of a neighboring base station of the base station from a radio resource management server, and receive an access request message from the multimode user equipment;
a determining module, configured to, after the receiving module receives the access request message, determine an accessible base station according to radio resource management information of the base station and the radio resource management information of the neighboring base station that is received by the receiving module; and
a sending module, configured to send an access response message that is generated according to the accessible base station determined by the determining module to the multimode user equipment, so that the multimode user equipment sets up a connection with the accessible base station according to the access response message.

17. The base station according to claim 16, wherein the receiving module further receives, from the multimode user equipment, identifier information of at least one base station serving the multimode user equipment, and the determining module selects, according to the radio resource management information of the neighboring base station, the radio resource management information of the base station, and the identifier information of the at least one base station, a base station that is appropriate for access as the accessible base station.

18. The base station according to claim 16 or 17, wherein when the accessible base station is the base station, the access response message is a connection setup message,
or
when the accessible base station is one of the at least one base station, the access response message is a connection rejection message, and the connection rejection message comprises identifier information of the accessible base station.

19. A multimode user equipment, comprising:
a sending module, configured to send an access request message and identifier information of at least one base station serving the multimode user equipment to a first base station, so that the first base station determines an accessible base station according to radio resource management information of a neighboring base station of the first base station, radio resource management information of the first base station, and the identifier information of the at least one base station;
a receiving module, configured to receive, from the first base station, an access response message that is generated by the first base station according to the determined accessible base station after the first base station receives the access request message from the sending module; and
a determining module, configured to determine the accessible base station according to the access response message received by the receiving module, so as to set up a connection with the accessible base station.

20. The multimode user equipment according to claim 19, wherein when the access response message is a connection setup message, the determining module determines that the accessible base station is the first base station, so as to set up a connection with the first base station.

21. The multimode user equipment according to claim 19, wherein when the access response message is a connection rejection message, the determining module determines that the accessible base station is one of the at least one base station and extracts information of the one of the at least one base station from the connection rejection message, the connection rejection message comprises the information of the one of the at least one base station, and the sending module sends another access request message to the one of the at least one base station, so as to set up a connection with the one of the at least one base station.

22. A base station, comprising:
a receiving module, configured to receive radio resource management information of a neighboring base station of a first base station from a radio resource management server; and
a sending module, configured to send, to a multimode user equipment, radio resource management information of the first base station and the radio resource management information of the neighboring base station that is received by the receiving module, so that the multimode user equipment determines an accessible base station according to the radio resource management information of the neighboring base station of the radio resource management information of the first base station, and sets up a connection with the accessible base station.

23. A multimode user equipment, comprising:
a receiving module, configured to receive, from a first base station, radio resource management information of a neighboring base station of the first base station and radio resource management information of the first base station, wherein the first base station receives the radio resource management information of the neighboring base station from a radio resource management server;
a determining module, configured to determine an accessible base station according to the radio resource management information of the first base station and the radio resource management information of the neighboring base station that is received by the receiving module; and
a sending module, configured to send an access request message to the accessible base station determined by the determining module, so as to set up a connection with the accessible base station.

24. The multimode user equipment according to claim 23, further comprising:
an acquiring module, configured to acquire identifier information of at least one base station serving the multimode user equipment, wherein the determining module selects, according to the radio resource management information of the neighboring base station, the radio resource management information of the first base station, and the identifier information of the at least one base station, a base station that is appropriate for access as the accessible base station.

25. A radio resource management server, comprising:
an acquiring module, configured to acquire radio resource management information of at least one base station; and
a sending module, configured to send radio resource management information of a neighboring base station of one of the at least one base station that is obtained by the obtaining module to the one of the at least one base station, so that the one of the at least one base station or a multimode user equipment determines an accessible base station for the multimode user equipment according to the radio resource management information and identifier information of a base station serving the user equipment, so that the multimode user equipment sets up a connection with the accessible base station.

26. A method for multimode user equipment access, comprising:
receiving, by a radio resource management server, radio resource management information of a first base station and radio resource management information of a neighboring base station of the first base station, wherein the radio resource management information is sent by a first access network element;
receiving, by the radio resource management server, an access request message that is sent by the first access network element according to an access request of a multimode user equipment;
determining, by the radio resource management server, an accessible base station according to the radio resource management information of the first base station and the radio resource management information of the neighboring base station of the first base station; and
sending, by the radio resource management server, an access response message that is generated according to the determined accessible base station to the first access network element.

27. The method according to claim 26, further comprising:
receiving, by the radio resource management server, identifier information of at least one base station serving the multimode user equipment, wherein the identifier information of the at least one base station is sent by the first access network element, wherein:
the determining, by the radio resource management server, an accessible base station according to the radio resource management information of the first base station and the radio resource management information of the neighboring base station of the first base station comprises:
selecting, by the radio resource management server according to the radio resource management information of the first base station, the radio resource management information of the neighboring base station of the first base station, and the identifier information of the at least one base station, a base station that is appropriate for access as the accessible base station.

28. The method according to claim 27, further comprising:
sequencing, by the radio resource management server, the neighboring base station of the first base station and the first base station according to the radio resource management information of the neighboring base station of the first base station and the radio resource management information of the first base station, wherein:
the selecting, by the radio resource management server according to the radio resource management information of the first base station, the radio resource management information of the neighboring base station of the first base station, and the identifier information of the at least one base station, a base station that is appropriate for access as the accessible base station comprises:
selecting, by the radio resource management server according to a result of the sequencing and from an intersection between the neighboring base station and the at least one base station, a base station that is appropriate for access as the accessible base station, or selecting, according to a result of the sequencing and the identifier information of the at least one base station and from an intersection between the neighboring base station and the at least one base station and from the first base station, a base station that is appropriate for access as the accessible base station.

29. The method according to any one of claims 26 to 27, wherein the first access network element is the first base station, or the first access network element is a controller for managing the first base station.

30. The method according to any one of claims 26 to 29, wherein the access request message comprises at least one of the following factors: quality of service of a service of the multimode UE, bandwidth required by the service, a transmission rate of the multimode UE, a measurement result of a metric of a base station, transmit power of the multimode UE, and location information of the multimode UE, wherein:
the determining, by the radio resource management server, an accessible base station according to the radio resource management information of the first base station and the radio resource management information of the neighboring base station of the first base station comprises:
determining, by the radio resource management server, the accessible base station according to the radio resource management information of the first base station, the radio resource management information of the neighboring base station of the first base station, and at least one of the following factors: the quality of service of the service of the multimode UE, the bandwidth required by the service, the transmission rate of the multimode UE, the measurement result of the metric of the base station, the transmit power of the multimode UE, and the location information of the multimode UE.

31. A method for multimode user equipment access, comprising:
sending, by a first access network element, radio resource management information of a first base station to a radio resource management server;
receiving, by the first access network element, a first access request message sent by a multimode user equipment;
sending, by the first access network element, a second access request message to the radio resource management server according to the first access request message, so that the radio resource management server determines an accessible base station according to radio resource management information of a neighboring base station of the first base station and the radio resource management information of the first base station;
receiving, by the first access network element, a first access response message that is sent by the radio resource management server according to the determined accessible base station; and
sending, by the first access network element, a second access response message to the multimode user equipment according to the first access response message.

32. The method according to claim 31, comprising:
sending, by the first access network element, identifier information of at least one base station serving the multimode user equipment to the radio resource management server, so that the radio resource management server determines the accessible base station according to the radio resource management information of the first base station and the radio resource management information of the neighboring base station of the first base station.

33. The method according to claim 31 or 32, wherein the first access network element is the first base station, or the first access network element is a controller for managing the first base station.

34. The method according to any one of claims 31 to 33, wherein the second access request message further comprises at least one of the following factors: quality of service of a service of the multimode UE, bandwidth required by the service, a transmission rate of the multimode UE, a measurement result of a metric of a base station, transmit power of the multimode UE, and location information of the multimode UE, so that the radio resource management server determines the accessible base station according to the radio resource management information of the neighboring base station of the first base station, the radio resource management information of the first base station, and at least one of the following factors: the quality of service of the service of the multimode UE, the bandwidth required by the service, the transmission rate of the multimode UE, the measurement result of the metric of the base station, the transmit power of the multimode UE, and the location information of the multimode UE.

35. A method for multimode user equipment access, comprising:
receiving, by a first controller from a radio resource management server, radio resource management information of a neighboring base station of a first base station managed by the first controller;
receiving, by the first controller, an access request message sent by the multimode user equipment;
determining, by the first controller after receiving the access request message, an accessible base station according to radio resource management information of the first base station and the radio resource management information of the neighboring base station of the first base station; and
sending, by the first controller, an access response message that is generated according to the determined accessible base station to the multimode user equipment, so that the multimode user equipment sets up a connection with the accessible base station according to the access response message.

36. The method according to claim 35, further comprising: receiving, by the first controller, identifier information of at least one base station serving the multimode user equipment, wherein the identifier information of the at least one base station is sent by the multimode user equipment, wherein
the determining an accessible base station according to radio resource management information of the first base station and the radio resource management information of the neighboring base station of the first base station comprises:
selecting, by the first controller according to the radio resource management information of the first base station, the radio resource management information of the neighboring base station, and the identifier information of the at least one base station, a base station that is appropriate for access as the accessible base station.

37. The method according to claim 36, further comprising:
sequencing, by the first controller, the neighboring base station and the first base station according to the radio resource management information of the first base station and the radio resource management information of the neighboring base station of the first base station, wherein:
the selecting, by the first controller according to the radio resource management information of the first base station, the radio resource management information of the neighboring base station, and the identifier information of the at least one base station, a base station that is appropriate for access as the accessible base station comprises:
selecting, by the first controller according to a result of the sequencing and the identifier information of the at least one base station and from an intersection between the neighboring base station and the at least one base station and from the first base station, a base station that is appropriate for access as the accessible base station.

38. The method according to any one of claims 35 to 37, wherein when the accessible base station is the first base station, the access response message is a connection setup message,
or
when the accessible base station is one of the at least one base station, the access response message is a connection rejection message, and the connection rejection message comprises identifier information of the accessible base station.

39. The method according to any one of claims 35 to 38, wherein the determining the accessible base station according to the radio resource management information of the first base station and the radio resource management information of the neighboring base station of the first base station comprises:
determining, by the first controller, the accessible base station according to the radio resource management information of the first base station, the radio resource management information of the neighboring base station of the first base station, and at least one of the following factors: quality of service of a service of the multimode UE, bandwidth required by the service, a transmission rate of the multimode UE, a measurement result of a metric of a base station, transmit power of the multimode UE, and location information of the multimode UE.

40. A method for multimode user equipment access, comprising:
sending, by a multimode user equipment, an access request message and identifier information of at least one base station serving the multimode user equipment to a first controller, so that the first controller determines an accessible base station according to radio resource management information of a neighboring base station of a first base station managed by the first controller, radio resource management information of the first base station, and the identifier information of the at least one base station;
receiving, by the multimode user equipment, an access response message that is generated according to the determined accessible base station and sent by the first controller; and
determining, by the multimode user equipment, the accessible base station according to the access response message, so as to set up a connection with the accessible base station.

41. The method according to claim 40, wherein the determining, by the multimode user equipment, the accessible base station according to the access response message, so as to set up a connection with the accessible base station comprises:
when the access response message is a connection setup message, determining, by the multimode user equipment that the accessible base station is the first base station, so as to set up a connection with the first base station.

42. The method according to claim 40, wherein the determining, by the multimode user equipment, the accessible base station according to the access response message, so as to set up a connection with the accessible base station comprises:
when the access response message is a connection rejection message, determining, by the multimode user equipment that the accessible base station is one of the at least one base station, wherein the connection rejection message comprises identifier information of the one of the at least one base station;
the method further comprising:
extracting, by the multimode user equipment, the identifier information of the one of the at least one base station from the connection rejection message; and
sending, by the multimode user equipment, another access request message to the one of the at least one base station, so as to set up a connection with the one of the at least one base station.

43. A radio resource management server, comprising:
a first receiving module, configured to receive radio resource management information of a first base station and radio resource management information of a neighboring base station of the first base station, wherein the radio resource management information is sent by a first access network element, and receive an access request message that is sent by the first access network element according to an access request of a multimode user equipment;
a first determining module, configured to determine an accessible base station according to the radio resource management information of the first base station and the radio resource management information of the neighboring base station of the first base station, wherein the radio resource management information is received by the first receiving module; and
a first sending module, configured to send, to the first access network element, an access response message that is generated according to the accessible base station determined by the first determining module.

44. The radio resource management server according to claim 43, wherein the first receiving module further receives identifier information of at least one base station serving the multimode user equipment, wherein the identifier information of the at least one base station is sent by the first access network element, and the first determining module selects, according to the radio resource management information of the first base station, the radio resource management information of the neighboring base station of the first base station, and the identifier information of the at least one base station, a base station that is appropriate for access as the accessible base station.

45. The radio resource management server according to claim 44, wherein the first determining module is further configured to sequence the neighboring base station of the first base station and the first base station according to the radio resource management information of the first base station and the radio resource management information of the neighboring base station of the first base station, and the first determining module selects, according to a result of the sequencing and from an intersection between the neighboring base station and the at least one base station, a base station that is appropriate for access as the accessible base station, or selects, according to a result of the sequencing and the identifier information of the at least one base station and from an intersection between the neighboring base station and the at least one base station and from the first base station, a base station that is appropriate for access as the accessible base station.

46. The radio resource management server according to any one of claims 43 to 45, wherein the first access network element is the first base station or the first access network element is a controller for managing the first base station.

47. An access network element, comprising:
a second receiving module, configured to receive a first access request message sent by a multimode user equipment and receive a first access response message that is sent by the radio resource management server according to a determined accessible base station; and
a second sending module, configured to send radio resource management information of a first base station to the radio resource management server, and send a second access request message to the radio resource management server according to the first access request message received by the second receiving module, so that the radio resource management server determines an accessible base station according to radio resource management information of a neighboring base station of the first base station and the radio resource management information of the first base station, and sends a second access response message to the multimode user equipment according to the first access response message received by the second receiving module.

48. The access network element according to claim 47, wherein the second sending module further sends identifier information of at least one base station serving the multimode user equipment to the radio resource management server, so that the radio resource management server determines the accessible base station according to the radio resource management information of the first base station and the radio resource management information of the neighboring base station of the first base station.

49. The access network element according to claim 47 or 48, wherein the first access network element is the first base station or the first access network element is a controller for managing the first base station.

50. A controller, comprising:
a third receiving module, configured to receive, from a radio resource management server, radio resource management information of a neighboring base station of a first base station managed by the first controller, and receive an access request message sent by the multimode user equipment;
a second determining module, configured to determine an accessible base station according to radio resource management information of the first base station and the radio resource management information of the neighboring base station of the first base station, wherein the radio resource management information is received by the third receiving module; and
a third sending module, configured to send, to the multimode user equipment, an access response message that is generated according to the accessible base station determined by the second determining module, so that the multimode user equipment sets up a connection with the accessible base station according to the access response message.

51. The controller according to claim 50, wherein the third receiving module further receives identifier information of at least one base station serving the multimode user equipment, wherein the identifier information of the at least one base station is sent by the multimode user equipment, and the second determining module selects, according to the radio resource management information of the first base station, the radio resource management information of the neighboring base station, and the identifier information of the at least one base station, a base station that is appropriate for access as the accessible base station.

52. The controller according to claim 51, wherein the second determining module further sequences the neighboring base station and the first base station according to the radio resource management information of the first base station and the radio resource management information of the neighboring base station of the first base station, and the second determining module selects, according to a result of the sequencing and the identifier information of the at least one base station and from an intersection between the neighboring base station and the at least one base station and from the first base station, a base station that is appropriate for access as the accessible base station.

53. The controller according to any one of claims 50 to 52, wherein when the accessible base station is the first base station, the access response message is a connection setup message, or when the accessible base station is one of the at least one base station, the access response message is a connection rejection message, and the connection rejection message comprises identifier information of the accessible base station.

54. A multimode user equipment, comprising:
a fourth sending module, configured to send an access request message and identifier information of at least one base station serving the multimode user equipment to a first controller, so that the first controller determines an accessible base station according to radio resource management information of a neighboring base station of a first base station managed by the first controller, radio resource management information of the first base station, and the identifier information of the at least one base station;
a fourth receiving module, configured to receive an access response message that is generated according to the determined accessible base station and is sent by the first controller; and
a third determining module, configured to determine the accessible base station according to the access response message received by the fourth receiving module, so as to set up a connection with the accessible base station.

55. The multimode user equipment according to claim 54, wherein when the access response message is a connection setup message, the third determining module determines that the accessible base station is the first base station, so as to set up a connection with the first base station.

56. The multimode user equipment according to claim 54, wherein when the access response message is a connection rejection message, the third determining module determines that the accessible base station is one of the at least one base station, wherein the connection rejection message comprises identifier information of the one of the at least one base station, the third determining module further extracts the identifier information of the one of the at least one base station from the connection rejection message, and the fourth sending module further sends another access request message to the one of the at least one base station, so as to set up a connection with the one of the at least one base station.
